# EUROPEAN PATENT APPLICATION

(11) **EP 4 044 184 A1**
(43) Date of publication of application: **17.08.2022**
(21) Application number: 22150349.3
(22) Date of filing: 05.01.2022
(51) Int. Cl.: G11B 27/28, G11B 27/031, G10L 21/055, G10L 25/18, G11B 27/10

(54) **A METHOD AND A SYSTEM FOR DETERMINING A 3-DIMENSIONAL DATA STRUCTURE OF AN AUDIO FILE, AND A PLAYBACK POSITION IN THE AUDIO FILE FOR SYNCHRONIZATION**

(30) Priority: 15.02.2021 IN 202111006282
(71) Applicant: Dubswork Mobile Private Limited, 110065 New Delhi (IN)
(72) Inventor: KASHYAP, Vineet, 110065 New Delhi (IN); KUMAR, Pawan, 132103 Panipat (IN)
(74) Representative: Canzler & Bergmeier Patentanwälte Partnerschaft mbB

(57) **Abstract**

The present disclosure describes a method and a system for determining a 3-dimensional data structure of an audio file, and a playback position in the audio file for synchronization of media playbacks. In many circumstances the media files while displayed in a theater, TV or mobile display comprise an audio track which may not be comfortable to minority of the audiences. According to some embodiments, the methods and the systems discloses in present invention determines the 3-Dimensional data structure of an audio file and based on which the playback position of the audio file from a media source is determined. In another embodiment of the invention, the method and the system of the present invention also provides synchronization of the playback to ensure that the alternate audio file runs in sync with the original audio file or video file.

## Description

### TECHNICAL FIELD

The present disclosure relates generally to a method and a system for determining a 3-dimensional data structure of an audio file, and a playback position in the audio file, and more particularly relates to determining the playback position in one audio file and synchronizing playback of the other audio file based on the determined playback position.

### BACKGROUND

The media files are commonly used for displaying on TVs, theaters, mobile phones etc. The media files include video track and audio track. In general, the video track remains same and the variation lies in the audio track of it. For example, in some cases the video tracks are provided with alternate audio tracks based on the audiences. However, the availability of the audio track whether original or alternate, depends on the preference of the majority of the audiences and therefore, minority may feel uncomfortable with the audio track.

### SUMMARY

The following summary is provided to facilitate an understanding of some of the innovative features unique to the disclosed embodiment and is not intended to be a full description. A full appreciation of the various aspects of the embodiments disclosed herein can be gained by taking into consideration the entire specification, claims, drawings, and abstract as a whole.

In a first aspect of the present disclosure, a method for determining a 3-Dimensional data structure of an audio file is disclosed. The method may comprise dividing, by a segmenting unit, audio samples present in a time duration of said audio file into a plurality of segments of defined length, and determining number of said segments per second and total number of segments in said time duration of said audio file; determining, by a processing unit, set of frequencies in each of said segments; and determining, by said processing unit, a position value for each of said frequencies in each of said segments.

According to an embodiment in conjunction to the first aspect of the present disclosure, the method may further comprise mapping, by said processing unit, said number of segments, said set of frequencies in each of said segments and said position value of each of said frequency in each of said segments, to form a classified frequency indexes file of said audio file; and storing, by a storage unit, said number of segments, said set of frequencies in each of said segments and said position value for each of said frequencies in each of said segments.

In a second aspect of the present disclosure, a method for determining a 3-dimensional data structure of an audio file is disclosed. The method may comprise recording, by a recording unit, said audio file from a media source in real time; dividing, by a segmenting unit, audio samples present in a time duration of said audio file into a plurality of segments of defined length, and determining number of said segments per second and total number of segments in said time duration of said audio file; determining, by a processing unit, a set of frequencies in each of said segments; and classifying, by said processing unit, said frequencies into a binary value with respect to a first threshold value.

According to an embodiment in conjunction to the second aspect of the present disclosure, the method may further comprise determining, by said processing unit, said first threshold value for each of said frequencies in each of said segments.

According to an embodiment in conjunction to the second aspect of the present disclosure, the method may further comprise determining, by said processing unit, said first threshold value for said frequency in each of said segments is based on at least one of preceding and succeeding frequencies with respect to said frequency in said segment.

According to an embodiment in conjunction to the second aspect of the present disclosure, the method may further comprise mapping, by said processing unit, said number of segments, said set of frequencies in each of said segments, and said binary value for each of said frequencies in each of said segments, to form a classified frequency indexes file of said audio file; and storing, by a storage unit, said number of segments, said set of frequencies in each of said segments, and said binary value for each of said frequencies in each of said segments.

According to an embodiment in conjunction to the second aspect of the present disclosure, the method may further comprise classifying each of said frequencies in each of said segment to said binary value "1" corresponding to relevance of said frequency in said segment when magnitude of said frequency is above said first threshold value of said frequency, and classifying each of said frequencies in each of said segment to said binary value "0" corresponding to non-relevance of said frequency in said segment when magnitude of said frequency is below said first threshold value of said frequency.

In a third aspect of the present disclosure, a method for determining a playback position in a first audio file based on a third audio file is disclosed. The method may comprise determining a first classified frequency indexes file of said first audio file by - dividing, by a segmenting unit, audio samples present in a time duration of said first audio into a plurality of segments of defined length, and determining number of said segments per second and total number of segments in said time duration of said first audio file, determining, by the processing unit, a set of frequencies in each of said segments, determining, by said processing unit, a position value for each of said frequencies in each of said segments of said first audio, and mapping, by said processing unit, said number of segments, said frequencies in each of said segment and said position value of each of said frequency in each of said segments, to form said first classified frequency indexes file of said first audio file. The method also includes determining a second classified frequency indexes file of a third audio file by - dividing, by a segmenting unit, audio samples present in a time duration of said third audio file into a plurality of segments of defined length, and determining number of said segments per second and total number of segments in said time duration of said third audio file, determining, by said processing unit, set of frequencies in each of said segments, classifying, by a processing unit, said frequencies into a binary value with respect to a first threshold value, and mapping, by said processing unit, said number of segments, each of said frequencies in each of said segments, and said binary value for each of said frequencies in each of said segments, to form said second classified frequency indexes file of said third audio file. The method further includes determining the first playback position in said first audio file based on said third audio file by -comparing said second classified frequency indexes file of said third audio file with said first classified frequency indexes file of said first audio file to determine the playback position in said first audio file when said second classified frequency indexes file of said third audio file matches with said first classified frequency indexes file of said first audio file.

According to an embodiment in conjunction to the third aspect of the present disclosure, the method may further comprise synchronizing playback of the first audio file with a second audio file to play said second audio file from the first playback position of said first audio file and playing said second audio file from the first playback position of the first audio file.

According to an embodiment in conjunction to the third aspect of the present disclosure, the method may further comprise storing, by a storage unit, first classified frequency indexes file of said first audio file including said number of segments, said set of frequencies in each of said segments and said position value for each of said frequencies in each of said segments, and said second classified frequency indexes file of said third audio file including said number of segments, said set of frequencies in each of said segments, and said binary value for each of said frequencies in each of said segments.

According to an embodiment in conjunction to the third aspect of the present disclosure, wherein determining the second classified frequency indexes file of the third audio includes- recording, by a recording unit, said third audio from a media source in real time.

According to an embodiment in conjunction to the third aspect of the present disclosure, the method may further comprise determining, by said processing unit, said first threshold value for each of said frequencies in each of said segments based on at least one of preceding and succeeding frequencies with respect to said frequency in said segment, and classifying each of said frequencies in each of said segment to said binary value "1" corresponding to relevance of said frequency in said segment when magnitude of said frequency is above said first threshold value of said frequency, and classifying each of said frequencies in each of said segment to said binary value "0" corresponding to non-relevance of said frequency in said segment when magnitude of said frequency is below said first threshold value of said frequency.

According to an embodiment in conjunction to the third aspect of the present disclosure, the method may further comprise comparing each segment of said second classified frequency indexes file of said third audio file with a plurality of set of segments in said first classified frequency indexes file of said first audio file, and wherein number of segments in each set of said segments in said first classified frequency indexes file equals total number of segments in said second classified frequency indexes file.

According to an embodiment in conjunction to the third aspect of the present disclosure, the subsequent set of segments are formed in said first classified frequency indexes file by replacing said first segment of said set with said second segment of said set and adding the segment adjacent to the last segment of said set to equal total number of segments in said set with total number of segments in said second classified frequency indexes file.

According to an embodiment in conjunction to the third aspect of the present disclosure, the method may further comprise comparing each of said frequencies in each of said segments in said second classified frequency indexes file with the frequencies of each of said segments in said set of said first classified frequency indexes file, to classify each of said frequencies in each of said segments in the set of said first classified frequency indexes file to binary value "1" or "0" based on the binary value of the equivalent frequency in said segment of said second classified frequency indexes file.

According to an embodiment in conjunction to the third aspect of the present disclosure, the method may further comprise determining a matchup index value of each set of said segments in said first classified frequency indexes file by determining total number of frequencies with binary value "1" in said set with respect to total number of frequencies in said set and assigning said matchup index value to the first segment in said set of segments in said first classified frequency indexes file.

According to an embodiment in conjunction to the third aspect of the present disclosure, the method may further comprise determining the segment with highest said matchup index value in said first classified frequency indexes file and comparing highest said matchup index value with a second threshold value to identify the highest said matchup index value is above said second threshold value.

According to an embodiment in conjunction to the third aspect of the present disclosure, the method may further comprise comparing said matchup index value of the subsequent segments in said first classified frequency indexes file when the number of said segments in said first classified frequency indexes file with highest matchup index value is greater than 1; and determining the highest said matchup index value in said subsequent segments in said first classified frequency indexes file.

According to an embodiment in conjunction to the third aspect of the present disclosure, the method may further comprise determining a segment number of said segment in said first classified frequency indexes file for said playback position in said first audio file by identifying the segment with highest said matchup index value greater than said second threshold value and adding a first delay value equal to the total time taken in the method for determining said playback position in said first audio file to the identified segment number.

According to an embodiment in conjunction to the third aspect of the present disclosure, the method may further comprise adjusting playback rate of said second audio file based on the playback rate of said first audio file to keep said second audio file synchronized with said first audio file.

According to an embodiment in conjunction to the third aspect of the present disclosure, the method may further comprise determining a plurality of first playback position in said first audio file; determining a plurality of second playback position in said second audio file; comparing plurality of said first playback positions of said first audio file with a plurality of said second playback positions of said second audio file; and determining a second delay value between said first playback positions of said first audio file and said second playback positions of said second audio file to synchronise said second audio file with respect to said first audio file.

In a fourth aspect of the present disclosure, a system for determining a 3-Dimensional data structure of an audio file is disclosed. The system may comprise a processing unit configured to - divide audio samples present in a time duration of said audio file into a plurality of segments of defined length, and determine number of said segments per second and total number of segments in said time duration of said audio file, determine set of frequencies in each of said segments, and determine a position value for each of said frequencies in each of said segments; and a storage unit to store said audio file and said 3-Dimensional data structure of said audio file.

According to an embodiment in conjunction to the fourth aspect of the present disclosure, the processing unit maps said number of segments, said set of frequencies in each of said segments and said position value of each of said frequency in each of said segments, to form a classified frequency indexes file of said audio file, and the storage unit stores the number of segments in said audio file, said set of frequencies in each of said segments and said position value for each of said frequencies in each of said segments. The storage unit is at least one of a server storage and a local storage of a computing device.

In a fifth aspect of the present disclosure, a system for determining a 3-Dimensional data structure of an audio file is disclosed. The system may comprise a recording unit configured to record said audio file from a media source in real time; a processing unit configured to - divide audio samples present in a time duration of said audio file into a plurality of segments of defined length, and determine number of said segments per second and total number of segments in said time duration of said audio file, determine a set of frequencies in said segments, and classify said frequencies in said segments into a binary value with respect to a first threshold value; and a storage unit to store said audio file and said 3-Dimensional data structure of said audio file.

According to an embodiment in conjunction to the fifth aspect of the present disclosure, the processing unit determines said first threshold value for each of said frequencies in each of said segments based on at least one of preceding and succeeding frequency with respect to the frequency in said segment.

According to an embodiment in conjunction to the fifth aspect of the present disclosure, the processing unit is configured to map said number of segments, said set of frequencies in each of said segments, and said binary value for each of said frequencies in each of said segments, to form a classified frequency indexes file of said audio file.

According to an embodiment in conjunction to the fifth aspect of the present disclosure, the processing unit classifies each of said frequencies in each of said segments to said binary value "1" corresponding to relevance of said frequency in said segment when magnitude of said frequency is above said first threshold value of said frequency, and classifies each of said frequencies in each of said segment to said binary value "0" corresponding to non-relevance of said frequency in said segment when magnitude of said frequency is below said first threshold value of said frequency.

According to an embodiment in conjunction to the fifth aspect of the present disclosure, the processing unit is configured to map said number of segments, said set of frequencies in each of said segments, and said binary value for each of said frequencies in each of said segments, to form a classified frequency indexes file of said audio file. The storage unit stores the number of segments in said audio file, the set of frequencies in each of said segments and said binary value for each of said frequencies in each of said segments. The storage unit is at least one of a server storage and a local storage of a computing device.

In a sixth aspect of the present disclosure, a system for determining a playback position in a first audio file based on a third audio file is disclosed. The system may comprise a processing unit configured to - determine a first classified frequency indexes file of said first audio file by - dividing audio samples present in a time duration of said first audio file into a plurality of segments of defined length, and determining number of said segments per second and total number of segments in said time duration of said first audio file, determining a set of frequencies in each of said segments, determining a position value for each of said frequencies in each of said segments of said first audio file, and mapping, said number of segments, said set of frequencies in each of said segment and said position value of each of said frequency in each of said segments, to form said classified frequency indexes file of said first audio file. The processing unit further determines a second classified frequency indexes file of a third audio file by - dividing, audio samples present in a time duration of said third audio file into a plurality of segments of defined length, and determining number of said segments per second and total number of segments in said time duration of said third audio file, determining set of frequencies in said segments, classifying, said frequencies into a binary value with respect to a first threshold value, and mapping said number of segments, said set of frequencies in each of said segments, and said binary value for each of said frequencies in each of said segments, to form said second classified frequency indexes file of said third audio file. The processing unit further determines said first playback position in said first audio file based on said third audio file by - comparing said second classified frequency indexes file of said third audio file with said first classified frequency indexes file of said first audio file to determine the first playback position in said first audio file when said second classified frequency indexes file of said third audio file matches with said first classified frequency indexes file of said first audio file. The system also comprises a storage unit configured to store said first classified frequency indexes file and said second classified frequency indexes file.

According to an embodiment in conjunction to the sixth aspect of the present disclosure, a recording unit for recording said third audio file from a media source in real time, and the storage unit is at least one of a server storage and a local storage of a computing device.

According to an embodiment in conjunction to the sixth aspect of the present disclosure, the processing unit determines said first threshold value for each of said frequencies in each of said segments based on at least one of preceding and succeeding frequency with respect to said frequency in said segment, and wherein classifies each of said frequencies in each of said segment to said binary value "1" corresponding to relevance of said frequency in said segment when magnitude of said frequency is above said first threshold value of said frequency, and classifies each of said frequencies in each of said segment to said binary value "0" corresponding to non-relevance of said frequency in said segment when magnitude of said frequency is below said first threshold value of said frequency.

According to an embodiment in conjunction to the sixth aspect of the present disclosure, the processing unit compares each segment of said second classified frequency indexes file of said third audio file with a plurality of set of segments in said first classified frequency indexes file of said first audio file, and wherein number of segments in each set of said segments in said first classified frequency indexes file equals total number of segments in said second classified frequency indexes file. The subsequent set of segments are formed in said first classified frequency indexes file by replacing said first segment of said set with said second segment of said set and adding the segment adjacent to the last segment of said set to equal total number of segments in said set with total number of segments in said second classified frequency indexes file.

According to an embodiment in conjunction to the sixth aspect of the present disclosure, the processing unit compares each of said frequencies in each of said segments in said second classified frequency indexes file with the frequencies of each of said segments in said set of said first classified frequency indexes file, to classify each of said frequencies in each of said segments in the set of said first classified frequency indexes file to binary value "1" or "0" based on the binary value of the equivalent frequency in said segment of said second classified frequency indexes file.

According to an embodiment in conjunction to the sixth aspect of the present disclosure, the processing unit determines a matchup index value of each set of said segments in said first classified frequency indexes file by determining total number of frequencies with binary value "1" in said set with respect to total number of frequencies in said set, and stores said matchup index value in said storage unit against said segment and assigns said matchup index value to the first segment in said set of segments in said first classified frequency indexes file.

According to an embodiment in conjunction to the sixth aspect of the present disclosure, the processing unit determines segment with highest said matchup index value in said first classified frequency indexes file and compares highest said matchup index value with a second threshold value to identify said matchup index value is above said second threshold value.

According to an embodiment in conjunction to the sixth aspect of the present disclosure, the processing unit compares said matchup index value of the subsequent segments in said first classified frequency indexes file when the number of said segments in said first classified frequency indexes file with highest said matchup index value is greater than 1, and determines the highest matchup index value in said subsequent segments in said first classified frequency indexes file.

According to an embodiment in conjunction to the sixth aspect of the present disclosure, the processing unit determines a segment number of the said segment in said first classified frequency indexes file for said first playback position in said first audio file by identifying the segment with highest said matchup index value greater than second threshold value and adding a first delay value equal to the total time taken in the method for determining the said first playback position in said first audio file to the identified segment number.

According to an embodiment in conjunction to the sixth aspect of the present disclosure, the processing unit synchronizes playback of the first audio file with a second audio file to play said second audio file from the first playback position of the said first audio file, and plays said second audio file from the first playback position of the first audio file.

According to an embodiment in conjunction to the sixth aspect of the present disclosure, the processing unit adjusts playback rate of said second audio file based on playback rate of said first audio file to keep said second audio file synchronized with said first audio file.

According to an embodiment in conjunction to the sixth aspect of the present disclosure, the processing unit is configured to determining a plurality of first playback positions in said first audio file; determining a plurality of second playback positions in said second audio file; comparing the plurality of said first playback positions of said first audio file with the plurality of said second playback positions of said second audio file; and determining a second delay value between said playback positions of said first audio file and said playback positions of said second audio file to synchronise said second audio file with respect to said first audio file.

### BRIEF DESCRIPTION OF THE DRAWINGS

The accompanying drawings are included in order to more clearly illustrate the embodiments of the present disclosure and the related art. The drawings included herein provide a further understanding of the disclosure, and are incorporated in and constitute a part of the present disclosure. It is appreciable that the drawings illustrate implementations of the disclosure and, together with the description, serve to explain the principles of the disclosure. It is apparent that the drawings are merely some embodiments of the present disclosure, a person having ordinary skill in this field can obtain other figures according to these figures without paying the premise.
Figure 1 is a schematic illustration of an example system **100** depicting hardware components, according to an embodiment of the present disclosure.
Figure 2 is a schematic illustration of an example computing device **200** depicting hardware components, according to an embodiment of the present disclosure.
Figure 3 is a schematic illustration of an example processing unit **300** depicting components, according to an embodiment of the present disclosure.
Figure 4 is a schematic illustration of an example system **400** depicting components, according to an embodiment of the present disclosure.
Figure 5 is a flow diagram that illustrates an example method **500** disclosing determining a 3D data structure of an audio file.
Figure 6 is a flow diagram that illustrates an example method **600** disclosing determining a 3D data structure of a recorded audio file.
Figure 7 is a flow diagram that illustrates an example method **700** disclosing determining a 3D data structure of a recorded audio file with first threshold value.
Figure 8 is a flow diagram that illustrates an example method **800** disclosing determining a 3D data structure of a recorded audio file with first threshold value and binary value of frequencies.
Figure 9 is an illustration of an exemplary scenario **900,** according to an embodiment of the present disclosure, depicting time segment in an audio file.
Figure 10 is an illustration of an exemplary scenario **1000,** according to an embodiment of the present disclosure, depicting classification of set of frequencies in a time segment of an audio file.
Figure 11 is a flow diagram that illustrates an example method **1100** disclosing determining a playback position in a first audio file based on a second audio file.
Figure 12 is a flow diagram that illustrates an example method **1200** disclosing determining a playback position in a first audio file based on a second audio file by comparing frequencies of both the audio files.
Figure 13 is a flow diagram that illustrates an example method **1300** disclosing determining a playback position in a first audio file based on a second audio file by determining the segment with highest match up index value.
Figure 14 is a flow diagram that illustrates an example method **1400** disclosing determining a playback position in a first audio file based on a second audio file by determining the subsequent segments with highest match up index value.
Figure 15 is an illustration of an exemplary scenario **1500,** according to an embodiment of the present disclosure, depicting matching of segments in audio files.
Figure 16 is a flow diagram that illustrates an example method **1600** disclosing synchronizing playback of an audio file.
Figure 17 is a flow diagram that illustrates an example method **1700** disclosing synchronizing playback of an audio file by adjusting playback rate.
Figure 18 is a flow diagram that illustrates an example method **1800** disclosing synchronizing playback of an audio file based on second delay value.

| **REFERENCE NUMERAL** | **DESCRIPTION** |
|---|---|
| 100 | Exemplary System |
| 110 | External display |
| 112 | Audio track from external display |
| 114 | Video track from external display |
| 120, 200 | Computing device |
| 122, 260 | Recording unit |
| 124,210 | Display unit |
| 130 | Server |
| 140 | Recording audio track from external display |
| 150 | Downloading classified frequency indexes file of an audio file from server |
| 220 | Control unit |
| 230 | Program code |
| 240, 300, 400 | Processing unit |
| 250 | Storage unit |
| 310,410 | Segmenting unit |
| 320, 420 | Frequency determining unit |
| 330 | Position value determining unit |
| 340, 440 | Mapping unit |
| 350, 450 | Filtering unit |
| 430 | Classification unit |
| 500, 600, 700, 800,1100, 1200, 1300, 1400, 1600, 1700, 1800 | Exemplary methodology |
| 900, 1000, 1500 | Exemplary Scenario |

The summary above, as well as the following detailed description of illustrative embodiments, is better understood when read in conjunction with the appended drawings. For the purpose of illustrating the present disclosure, exemplary constructions of the disclosure are shown in the drawings. However, the disclosure is not limited to specific methods and instrumentalities disclosed herein. Moreover, those in the art will understand that the drawings are not to scale. Wherever possible, like elements have been indicated by identical numbers.

### DETAILED DESCRIPTION OF THE EMBODIMENTS

Detailed embodiments and implementations of the claimed subject matters are disclosed herein in detail with the technical matters, structural features, achieved objects, and effects with reference to the accompanying drawings as follows. It shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. Specifically, the terminologies in the embodiments of the present disclosure are merely for describing the purpose of the certain embodiment, but not to limit the disclosure. In the description below, details of well-known features and techniques may be omitted to avoid unnecessarily obscuring the presented embodiments and implementations.

The particular configurations discussed in the following description are nonlimiting examples that can be varied and are cited merely to illustrate at least one embodiment and are not intended to limit the scope thereof.

Unless otherwise specified, an audio file, a first audio file, a second audio file, a third audio file, a downloaded audio file, and a recorded audio file describe a common objective in the present disclosure and may be used or preferred either temporally, spatially, in ranking, in preference or in any other possible manner.

The various illustrative logical blocks, units, modules, means, and the steps described in connection with the embodiments disclosed herein may be implemented as electronic hardware (e.g., a digital implementation, an analog implementation, or a combination thereof, which may be designed using program code or the like techniques). In order to illustrate the interchangeability of hardware and software, the various illustrative components, blocks, modules, and steps have been described herein generally in terms of their functionality. The various illustrative logical blocks, units, modules, and steps described in connection with the embodiments of the disclosure herein may be implemented within or performed by an integrated circuit ("IC"). The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both.

Embodiments of the present disclosure relate to a method and a system for determining a 3-dimensional data structure of an audio file, a playback position and for synchronizing playback.

The technical solutions of the embodiments of the disclosure may be applied to one or more devices. A **device** may be of a portable device or a non-portable device, having imaging and sound capabilities. The device may be capable of performing wireless communication. The device may be a handheld device like smartphone or non-smart phone, wireless device, mobile phone, tablet, computer, laptop, gaming console, a wearable smart device, notebook, netbook, television like smart television or non-smart television, desktop and/ or the like. The device may also include a wireless organizer, pager, personal digital assistant, handheld wireless communication device, wirelessly enabled computer, portable gaming device or any other portable electronic device with processing and communication capabilities. The device may include a device with peripheral devices such as display, touchscreen, projector, digital watch, camera, digital scanner, and any other types of auxiliary device that may download file or install application. In general, the term device can be broadly defined to encompass any electronic, computing, and/ or telecommunications device, or combination of devices having imaging and/or audio capabilities.

A **processing unit** may include without limitation, microcontroller, microprocessor, embedded processor, media processor, graphics processing unit (GPU), central processing unit (CPU), application processor, digital signal processor (DSP), reduced instruction set computing (RISC) processor, system on a chip (SoC), baseband processor, field programmable gate array (FPGA), programmable logic device (PLD), state machine, gated logic, discrete hardware circuit, and other suitable hardware configured to facilitate the innovative features as disclosed in the present detailed description. The processing unit for example may execute the instruction(s) for the functioning of the device. The processing unit may include other units or sub units for processing an audio file to determine the 3D structure of the audio file and may include for processing the structure of the audio file to determine the playback position of the audio file and may synchronize the audio file for playback.

A **storage unit** may be any form of storage either within or outside the device. The storage unit may store information regarding codes or program of the audio files or its 3D data structure of the audio files. The storage unit may include a database. In some embodiments of the present disclosure, the storage unit may also be a combination of one or more storage available internally or externally. For example, flash memory, random-access memory (RAM), read-only memory (ROM), compact disc read-only memory (CDROM), electro-optical memory like compact disk or digital versatile disk (DVD), smart card magneto-optical memory, erasable programmable read-only memory (EPROM), and electrically-erasable programmable read-only memory (EEPROM), and/ or the like. In some embodiments of the present disclosure, the storage unit may store or carry the source code or instruction for executing required tasks. In some embodiments of the present disclosure, the storage unit may be a cloud storage, server and/ or the like that may be accessible via the internet.

A **display unit or a display** may be a touch-sensitive or presence-sensitive display. In some embodiments of the present disclosure, the display includes an input/output interface module (I/O interface module). In some embodiments of the present disclosure, the display unit may provide an output to the user, for example, display contents, including without limitation, an image or a video image with or without audio and/ or the like. In some embodiments of the present disclosure, the display unit may include or be integrated with a touch screen or touch sensitive overlay for receiving touch input from the user. In some embodiments of the present disclosure, the display unit may also be capable of receiving a user input from a stylus, fingertip, or other means of gesture input. In some embodiments of the present disclosure, the display may be a computer monitor, for example, a personal computer, with an internal or external display operatively connected and or internal or external audio system. In yet another exemplary embodiment, the display may be a display device, such as an LCD TV or projector and/ or the like. In some embodiments of the present disclosure, the display unit may be a screen used in a theater or multiplex.

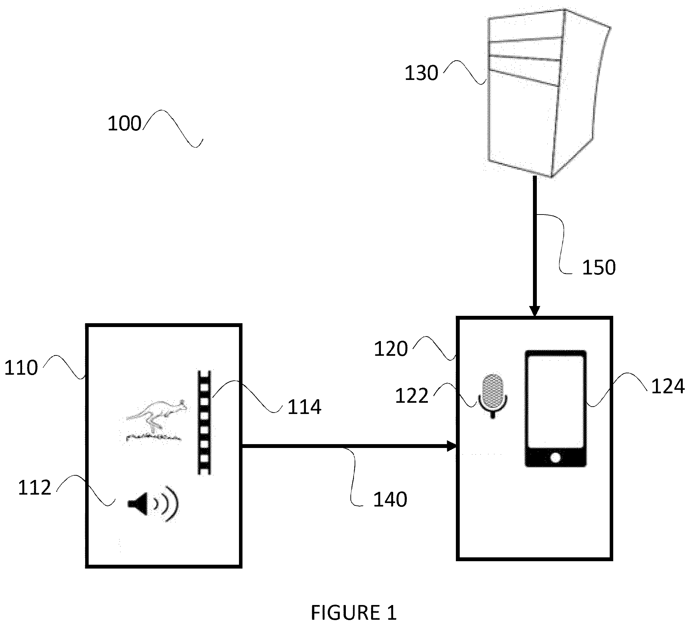

**Figure 1** is an illustration of an example system **100,** with a computing device **120** and an external display **110,** according to an embodiment of the present disclosure. Figure 1 illustrates the system **100** that may comprise a server **130,** an external display **110,** and the computing device **120.** The external display **110** may be any form of display including but not limited to a touch-sensitive or presence-sensitive display. In some embodiments of the present disclosure, the external display **110** may be a screen in a theater or multiplex. In some embodiments of the present invention, the external display may be a TV, LED TV, LCD TV or projector and/ or the like. The external display **110** may release an audio track **112** in any language. The external display **110** may display a video track **114** to be viewed by a viewer. The computing device **120** may include a recording unit **122** for recording audio track **112** from the external display **110** of external or internal media source. The computing device **120** may also include a display unit **124** for displaying a video track with or without an audio track. As shown in Figure 1, the recording unit **122** of the computing device **120** may record an audio track from the external display, **140.** The system **100** may also include a server **130.** The server **130** may be a memory unit or a storage unit at a remote location or at a nearby location. The server **130** may include 3D data structure file or a classified frequency indexes file of an audio file. The server **130** may also include code or application that converts or determines the 3D data structure of an audio file or a recorded audio file. The computing device **120** may download classified frequency indexes file of the audio file from the server, **150.** The computing device **120** may determine the playback position on the downloaded audio file from the server based on the audio track **112** recorded by the recording unit **122.** The computing device 120 may synchronize the downloaded audio file based on the recorded audio file from the external media file from the external display **110.**

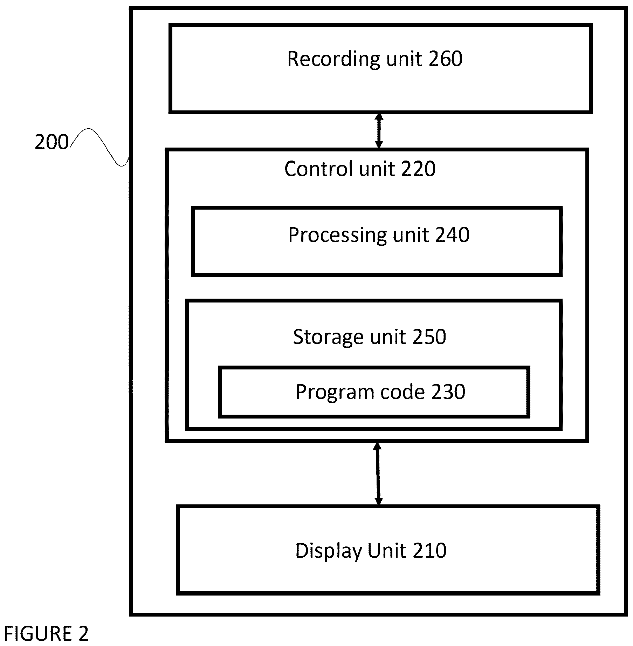

**Figure 2** is an illustration of an example computing device **200** depicting hardware components. Figure 2 shows that the computing device **200** may include a recording unit **260,** a control unit **220** and a display unit **210.** In some of the embodiments of the present invention, the recording unit **260** may be a microphone that may be either internal to the computing device **200** or external to the computing device **200.** The external microphone may be wired or may be wirelessly connected. In some of the embodiments of the present invention, the computing device **200** may include any of a video camera, vibration sensor, radio receiver, network interface, etc., to receive the media file or an audio file. The recording unit **260** records the audio file from a media source that may be external or internal to the computing device **200.** In some of the embodiments of the present invention, the recording unit **260** records the audio file and converts the analog sound signals to digitally sampled signals which may be stored as an audio file in the computing device **200.** The recorded audio file may be a small audio track of an audio recording of the audio file that may be currently being played in front of the computing device **200.** The computing device **200** may include the control unit **220** that controls the operation and execution of the steps disclosed herein. The control unit **220** may include a processing unit **240,** and a storage unit **250.** The processing unit **240** may be a central processing unit or a CPU including but not limited to a microprocessor. The processing unit **240,** alternatively may be any conventional processor, controller, microcontroller, or state machine. The processing unit **240** may also be implemented as a combination of computing devices, e.g., a combination of a DSP and a microprocessor, a plurality of microprocessors, one or more microprocessors in conjunction with a DSP core, or any other such configuration. The storage unit **250** may be a data memory such as RAM memory, flash memory, ROM memory, EPROM memory, EEPROM memory, registers, a hard disk, a removable disk, a CD-ROM, or any other form of computer-readable storage medium or the like. A sample storage unit **250** may be coupled to the processing unit **240** such as, for example, a computer/processor such that the processing unit can read information (e.g., code) from and write information to the storage unit. A sample storage unit **250** may be integral to the processing unit **240.** The processing unit **240** and the storage unit **250** may reside in an ASIC. The ASIC may reside in the computing device **200.** In some of the embodiments, the processing unit **240** and the storage unit **250** may reside as discrete components in the computing device **200.** In some of the embodiments, any suitable computer-program product may comprise a computer-readable medium comprising codes relating to one or more of the embodiments of the disclosure. In some of the embodiments, the computing device **200** may include a program code **230** stored in the storage unit **250.** The program code **230** may be executed by the processing unit **240** to perform all of the described actions and steps or others described herein. The computing device **200** may include a display unit **210.** The display unit **210** may be a touch-sensitive or presence-sensitive display. In some of the embodiments, the display unit **210** may be an LCD screen or the like.

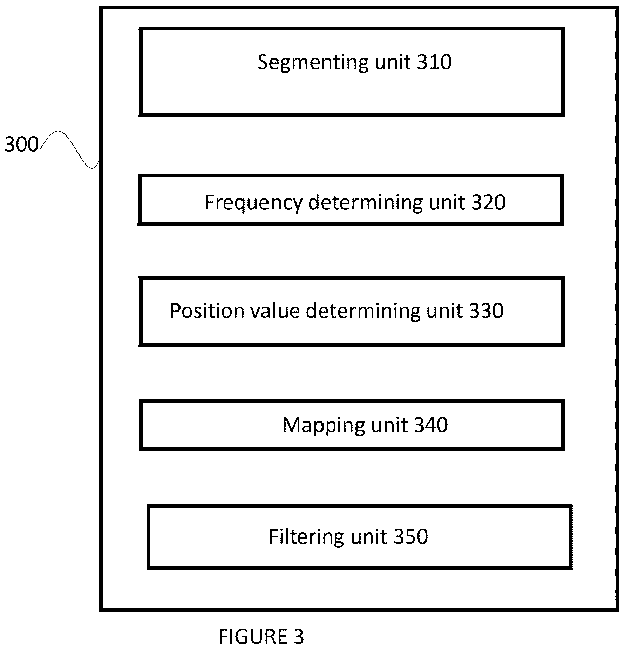

**Figure 3** is an illustration of an example processing unit **300** depicting components or modules for performing the actions or steps in determining the 3-dimensional structure of an audio file or determining the classified frequency index file of the audio file. The processing unit may include a segmenting unit **310.** The segmenting unit **310** divides the audio file into number of segments. In some of the embodiments of the present invention, the segmenting unit **310** divides the audio samples present in a time duration of the audio file into a plurality of segments. The audio file for example may be of any time duration, for example, may be 5 seconds to 1 hours or the like. The segments may be of defined length. The length of each segment may be predefined. For example, in one second of duration, there may be 20 segments or 40 segments. Likewise, the entire audio length of the audio file may be divided by the segmenting unit **310** into segments. For example, if the length of the audio file is 10 second, and the user divides each second into 20 segments, there may be a total 200 segments in the audio file. The segmenting unit **310** is configured to determine the number of segments per second and total number of segments in the time duration of the audio file, and may be stored in the storage unit.

In some of the embodiments of the present invention, the processing unit **300** may include a filtering unit **350.** The audio file may include a plurality of the frequencies, which may and may not be relevant to the user. For example, a range of frequencies that may be audible to a user may be a relevant frequency, and the frequency that may not be hearable to the user may not be relevant. The filtering unit **350** filters the frequencies or set of frequencies and allows only relevant or usable set of frequencies, as desired by the user. The filtering unit **350** may be an integrated part of the processing unit or may be a separate one. The structure of the filtering unit **350** is well known to a skilled person. In some of the embodiments of the present invention, the set of frequencies in each segment of the audio file is filtered to identify or determine the relevant set of frequencies.

In some of the embodiments of the present invention, the processing unit **300** may include a frequency determining unit **320.** Figure 3 shows the frequency determining unit **320** of the processing unit **300** configured to determine the set of frequencies in each of the segments. Each segment, for example, may have a plurality of frequencies, and the set frequencies or frequencies after filtration by filtering unit **350** is determined by the frequency determining unit **320** in each segment. In some of the embodiments, a fast fourier transform is performed on all the segments to determine a 2-dimensional data set of frequencies in each segment. In some of the embodiments of the present invention, the processing unit **300** may include a position value determining unit **330.** The position value determining unit **330** determines the position value or the index value of the frequency in each segment. For example, the segment may include 10 frequencies determined by the frequency determining unit **320** relevant to the user. The position value determining unit **330** assigns a position value, for example, f₁.......f₁₀, wherein the f₁ may be assigned to the first frequency in the segment and the f₁₀ may be assigned to the 10^{th} frequency of the segment. In some of the embodiments of the present invention, the processing unit **300** may include a mapping unit **340.** The mapping unit **340** maps the number of segments determined by the segmenting unit **310,** the set of frequencies in each of the segments determined by the frequency determining unit **320,** and the position value of each of the frequency in each of segment determined by the position value determining unit **330,** to form a classified frequency indexes file of the audio file. The classified frequency indexes file also termed as 3D or 3-dimensional data structure of the audio file.

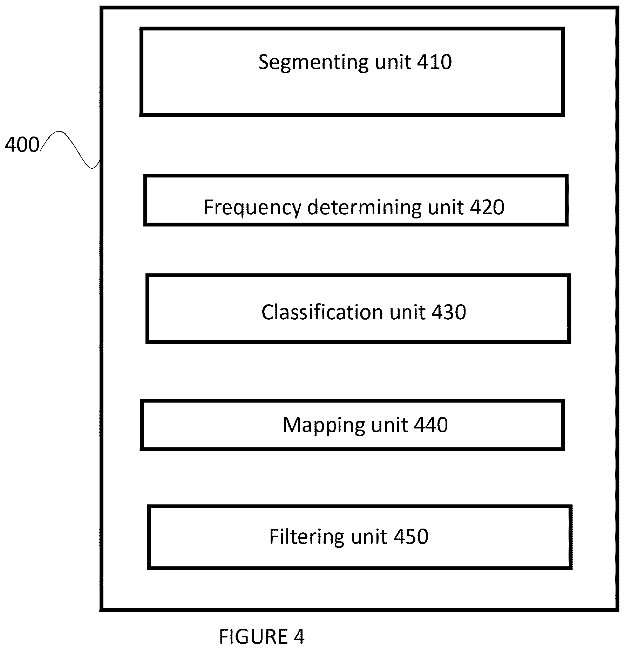

**Figure 4** is an illustration of an example processing unit **400** depicting components or modules for performing the actions or steps in determining the 3-dimensional data structure of an audio file or determining the classified frequency index file of the audio file. In some of the embodiment of the present invention, the audio file may be a recorded audio recorded from a media source in real time. The recorded audio may be a small audio track of pre-defined length. The length, for example, may be of 5 second, 10 seconds or the like. Figure 4 shows that the processing unit may include a segmenting unit **410.** The segmenting unit **410** divides the audio file or the recorded audio into number of segments. In some of the embodiments of the present invention, the segmenting unit **310** divides the audio samples present in a time duration of the audio file into a plurality of segments. The audio file for example may be of any time duration, for example, may be 5 seconds to 1 hours or the like. The segments may be of defined length. The length of each segment may be predefined. For example, in one second of duration, there may be 20 segments or 40 segments. Likewise, the entire audio length of the audio file may be divided by the segmenting unit **410** into segments. For example, if the length of the audio file is 10 second, and the user divides each second into 20 segments, there may be a total 200 segments in the audio file. The segmenting unit **410** is configured to determine the number of segments per second and total number of segments in the time duration of the audio file, and may be stored in the storage unit.

In some of the embodiments of the present invention, the processing unit **400** may include a filtering unit **450.** The audio file or recorded audio may include a plurality of the frequencies, which may and may not be relevant to the user. For example, a range of frequencies that may be audible to a user may be a relevant frequency, and the frequency that may not be hearable to the user may not be relevant. The filtering unit **450** filters the frequencies or set of frequencies and allows only relevant or usable set of frequencies to pass through, as desired by the user. The filtering unit **450** may be an integrated part of the processing unit or may be a separate one. The structure of the filtering unit **450** is well known to a skilled person. In some of the embodiments of the present invention, the set of frequencies in each segment of the audio file is filtered to identify or determine the relevant set of frequencies.

In some of the embodiments of the present invention, the processing unit **400** may include a frequency determining unit **420.** Figure 4 shows the frequency determining unit **420** of the processing unit **400** configured to determine the set of frequencies in each of the segments. Each segment, for example, may have a plurality of frequencies, and the set frequencies or frequencies after filtration by filtering unit **450** is determined by the frequency determining unit **420** in each segment. In some of the embodiments, a fast fourier transform is performed on all the segments to determine a 2-dimensional data set of frequencies in each segment. In some of the embodiments of the present invention, the processing unit **400** may include a classification unit **430.** The classification unit **430** classifies the set of frequencies or frequencies to a binary value "0" or "1" with respect to a first threshold value. The classification unit **430** may determine the first threshold value of each frequency of each segment. In some of the embodiments of the present invention, the classification unit **430** determines the first threshold value for the frequency in each segment based on one or more preceding and succeeding frequencies with respect to the frequency in the segment. In some of the embodiments of the present invention, the classification unit **430** determines the first threshold value of a frequency based on the magnitudes of its preceding set of frequencies and succeeding set of frequencies. For example, the segment S₁ may have 40 frequencies ranging from f₁.......f₄₀. The threshold value for the frequency f₂₀ may be determined based on the magnitudes of, for example, the 5 set of frequencies preceding and succeeding frequencies i.e. f₁₅... f₁₉ and f₂₁... f₂₅, respectively. Thereafter, the classification unit **430,** compares the magnitude of the frequency, for example, f₂₀ here, with the first threshold value of the frequency so determined. If the magnitude of the frequency, for example f₂₀ , is above the first threshold value, the classification unit **430** classifies the frequency, for example f₂₀, to a binary value "1". In case, the magnitude of the frequency, for example f₂₀, is below the first threshold value, the classification unit **430** classifies the frequency, for example f₂₀, to a binary value "0". In some of the embodiments of the present invention, the classification of each of said frequency in each of the segment to the binary value "1" corresponds to relevance of the frequency in the segment when magnitude of the frequency is above the first threshold value of the frequency. Whereas the classification of the frequency in each of the segment to the binary value "0" corresponds to non-relevance of the frequency in the segment when magnitude of the frequency is below the first threshold value of the frequency. In some of the embodiments of the present invention, the frequency with binary value "1" may be termed as classified frequency, and whereas the frequency with binary value "0" may be termed as non-classified frequency.

In some of the embodiments of the present invention, the processing unit **400** may include a mapping unit **440.** The mapping unit **440** maps the number of segments determined by the segmenting unit **410,** the set of frequencies in each of the segments determined by the frequency determining unit **420,** and the binary value of the of the frequency classified by the classification unit **430,** to form a classified frequency indexes file of the audio file or the recorded audio file. The classified frequency indexes file may also be termed as a 3D or 3-dimensional data structure of the audio file or the recorded audio file.

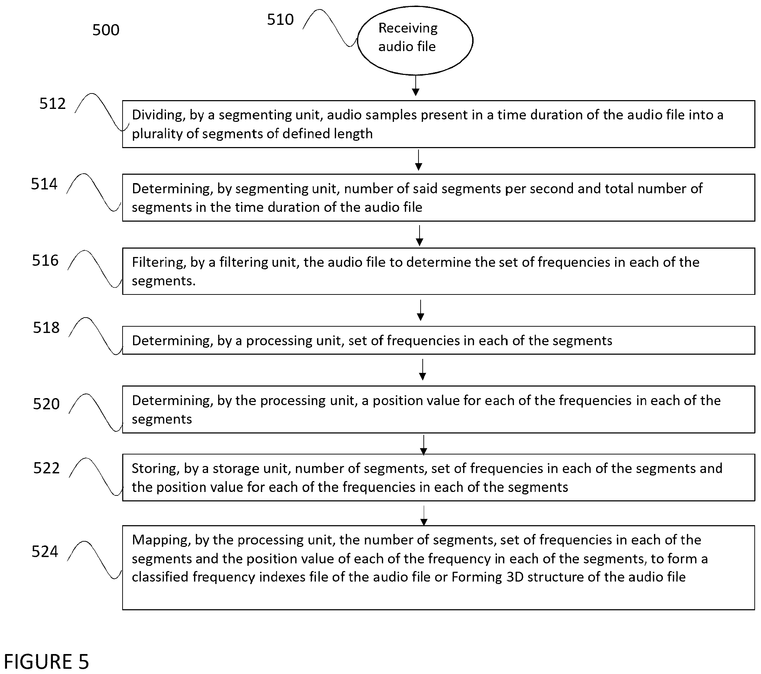

**Figure 5** is a flow diagram that illustrates an example method **500** disclosing determining a 3D data structure of an audio file, according to an embodiment of the present disclosure. At block **510,** the method **500** includes receiving, by a processing unit from a storage unit or server or the like, receiving the audio file. In some embodiments of the present disclosure, the audio file may be a pre-recorded audio file stored in a storage unit or in a server. The audio file may be of any predefined length ranging from seconds to hours. The audio file may be an audio track that is played in sync with the video track. At block **512,** the method **500** includes dividing, by a segmentation unit, the audio samples present in a time duration of the audio file into a plurality of segments. The segments may be of defined length. At block **514,** the method **500** includes determining, by a segmentation unit, the number of said segments per second and total number of segments in the time duration of the audio file. In some of the embodiments, the entire length of the audio file may be divided into seconds and each second may have one or more segments. For example, the audio file may be of 1 minute i.e. 60 seconds, and each second, for example, may have 20 segments. Therefore, total number of segments in the audio file of 1 minutes would be 1200 segments. In some of the embodiments of the present invention, the segments are numbered from first to last in a sequence, for example, the first second of 1^{st} second may be numbered as "1", where the first segment of the 2^{nd} second may be numbered "21", in case there are 20 segments in each second. At block **516,** the method **500** includes filtering, by a filtering unit, the audio file to determine the set of frequencies in each of the segments. The audio file may comprise of a plurality of frequencies, which may not be of any relevance to the user herein. Some of the frequencies may include frequencies in the range that are not audible to the human being. Some of the frequencies may be noise, that may not be of any relevance to the user. In some of the embodiments of the present invention, the filtering unit may be defined or changed case to case basis, i.e. the frequency that the filtering unit allows may vary from audio file to another audio file. The design of the filtering unit may be changed as per the need of the filtration and depending on the nature of frequency that is needed for creating the 3D data structure of the audio file. At block **518,** the method **500** includes determining, by the processing unit, the set of frequencies in each of the segment. Once the filtration is performed by the filtering unit the unwanted frequencies or irrelevant frequencies are filtered. In some of the embodiments of the present invention, the fast fourier transform is performed on each of the segment of the audio file to determine the 2D or 2-dimensional structure of the audio file or segment. In some of the embodiments of the present invention, in order to attain better and favorable results from the fast fourier transforms, a window functions on the audio sample file may be performed. This may help in reducing the spectral leakage. The spectral leakage is a term used to represent the loss of signal while performing fast fourier transform when considering chunks of original audio file or an audio file. In some of the embodiments of the present invention, the window function may help to reduce the spectral leakage by smoothing the window ends. In some of the embodiments of the present invention, the window function may be of desired configuration to attain the required efficiency herein. At block **520,** the method **500** includes determining, by the processing unit, a position value of the set of frequencies or each of the frequency in each of the segments. In some of the embodiments of the present invention, the position value or index value of the frequency is determined and stored against each segment. For example, a segment may include 10 frequencies relevant to the user. The position value of the 10 frequencies are determined, for example, f₁.......f₁₀, wherein the f₁ may be the position value of the first frequency and in the segment and the f₁₀ may be the position value of the 10^{th} frequency of the segment. At block **522,** the method **500** includes storing, by a storage unit, the number of segments, the set of frequencies or frequencies in each segment, and the position value of each of the frequencies in each of the segments. In some of the embodiments of the present invention, the 3D or 3-dimensional data of an audio file includes number of segments in the audio file, the set of frequencies or frequency in each segment and the position value of the frequency in the segment. In some of the embodiments of the present invention, the storage unit may be internal to the computing device or may be external like a server that may be connected wirelessly through different technologies known in the art. At block **524,** the method **500** includes mapping, by the processing unit, the number of segments in the audio file, the set of frequencies in each of the segments of the audio file, and the position value of each of the frequency in each of the segments of the audio file to form a classified frequency indexes file of the audio file or to form 3D structure of the audio file. In some of the embodiments of the present invention, the classified frequency indexes file or CFI represents the 3-dimensional data structure of the audio file, wherein the number of segments being the first dimension, the set of frequencies or frequencies being the second dimension, and the positional value of each of the frequency with respect to each other being the third dimension.

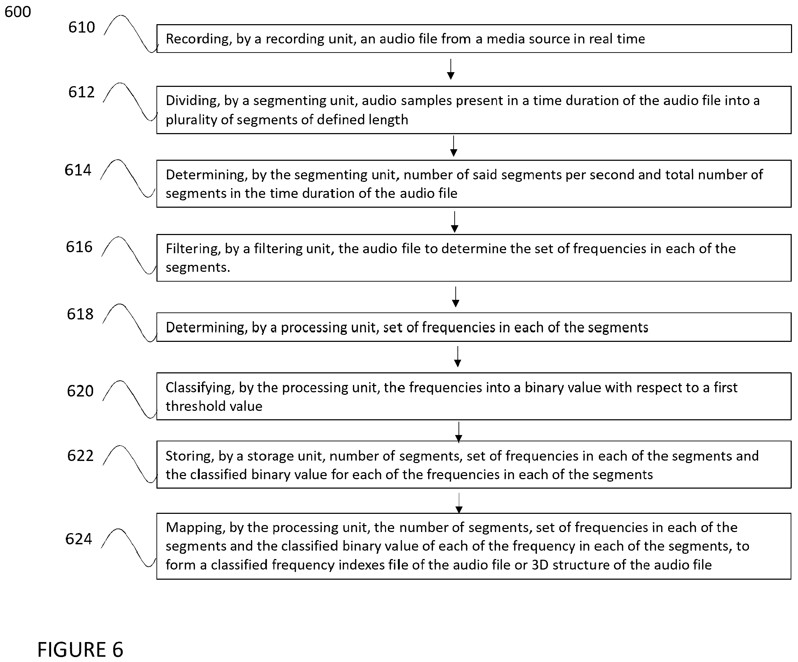

**Figure 6** is a flow diagram that illustrates an example method **600** disclosing determining a 3D data structure of an audio file being a recorded audio file, according to an embodiment of the present disclosure. At block **610,** the method 600 includes recording, by a recording unit, an audio file from a media source in real time. In some of the embodiments of the present invention, the media source may be a theater playing a movie, or TV playing a series or the like with or without a video track in it. In some of the embodiments of the present invention, the recorded audio file may be a small audio track recorded at the moment when the user is watching the movie or series or the like. In some of the embodiments of the present invention, the recorded audio track may be stored in internal storage unit of the computing device or may be external like server or the like. At block **612,** the method **600** includes dividing, by a segmentation unit, the audio samples present in a time duration of the audio file into a plurality of segments. The segments may be of defined length. At block **614,** the method **600** includes determining, by a segmentation unit, the number of said segments per second and total number of segments in the time duration of the audio file. In some of the embodiments, the entire length of the audio file may be divided into seconds and each second may have one or more segments. For example, the audio file may be of 1 minute i.e. 60 seconds, and each second, for example, may have 20 segments. Therefore, total number of segments in the audio file of 1 minutes would be 1200 segments. In some of the embodiments of the present invention, the segments are numbered from first to last in a sequence, for example, the first second of 1^{st} second may be numbered as "1", where the first segment of the 2^{nd} second may be numbered "21", in case there are 20 segments in each second. At block **616,** the method **600** includes filtering, by a filtering unit, the audio file or the recorded audio file to determine the set of frequencies in each of the segments. The audio file may comprise of a plurality of frequencies, which may not be of any relevance to the user herein. Some of the frequencies may include frequencies in the range that are not audible to the human being. Some of the frequencies may be noise, that may not be of any relevance to the user. In some of the embodiments of the present invention, the filtering unit may be defined or changed case to case basis, i.e. the frequency that the filtering unit allows may vary from audio file to another audio file. The design of the filtering unit may be changed as per the need of the filtration and depending on the nature of frequency that is needed for creating the 3D data structure of the audio file. At block **618,** the method **600** includes determining, by the processing unit, the set of frequencies in each of the segment. Once the filtration is performed by the filtering unit the unwanted frequencies or irrelevant frequencies are filtered. In some of the embodiments of the present invention, the fast fourier transform is performed on each of the segment of the audio file to determine the 2D or 2-dimensional structure of the audio file or segment. In some of the embodiments of the present invention, in order to attain better and favorable results from the fast fourier transforms, a window function on the audio sample file may be performed. This may help in reducing the spectral leakage. The spectral leakage is a term used to represent the loss of signal while performing fast fourier transform when considering chunks of original audio file or an audio file. In some of the embodiments of the present invention, the window function may help to reduce the spectral leakage by smoothing the window ends. In some of the embodiments of the present invention, the window function may be of desired configuration to attain the required efficiency herein. At block **620,** the method **600** includes classifying, by the processing unit, the frequencies into a binary value with respect to a first threshold value. In some of the embodiments of the present invention, the set of frequencies are classified to a binary value "0" or "1" with respect to the first threshold value. The first threshold value may be determined for each frequency of each segment. At block **622,** the method **600** includes storing, by a storage unit, the number of segments, the set of frequencies or frequencies in each segment, and the classified binary value of each of the frequency in each of the segment. In some of the embodiments of the present invention, the 3D or 3-dimenaional data of an audio file includes number of segments in the audio file, the set of frequencies or frequency in each segment and the classified binary value of the frequency in the segment. In some of the embodiments of the present invention, the storage unit may be internal to the computing device or may external like a server that may be connected wirelessly through different technologies known in the art. At block **624,** the method **600** includes mapping, by the processing unit, the number of segments in the audio file, the set of frequencies in each of the segments of the audio file, and the classified binary value of each of the frequency in each of the segments of the audio file to form a classified frequency indexes file of the audio file or to form 3D data structure of the audio file. In some of the embodiments of the present invention, the classified frequency indexes file or CFI represents the 3-dimensional data structure of the audio file, wherein the number of segments being the first dimension, the set of frequencies or frequencies being the second dimension, and the classified binary value of each of the frequency being the third dimension.

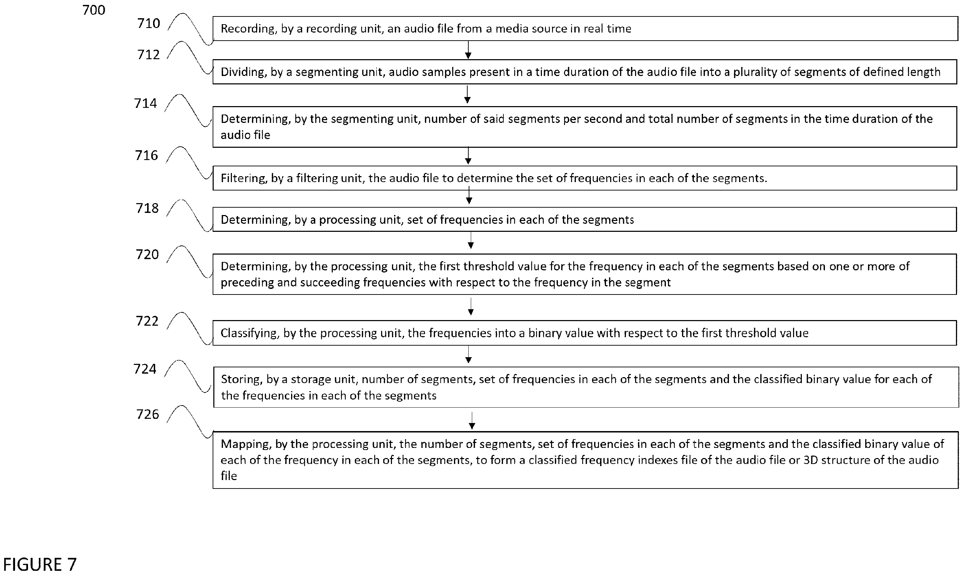

**Figure 7** is a flow diagram that illustrates an example method **700** disclosing determining a 3D data structure of an audio file or a recorded audio file with first threshold value, according to an embodiment of the present disclosure. At block **710,** the method **700** includes recording, by a recording unit, an audio file from a media source in real time. In some of the embodiments of the present invention, the media source may be a theater playing a movie, or TV playing a series or the like with or without a video track in it. In some of the embodiments of the present invention, the recorded audio file may be a small audio track recorded at the moment when the user is watching the movie or series or the like. In some of the embodiments of the present invention, the recorded audio track may be stored in internal storage unit of the computing device or may be external like server or the like. At block **712,** the method **700** includes dividing, by a segmentation unit, the audio samples present in a time duration of the audio file into a plurality of segments. The segments may be of defined length. At block **714,** the method **700** includes determining, by a segmentation unit, the number of said segments per second and total number of segments in the time duration of the audio file. In some of the embodiments, the entire length of the audio file may be divided into seconds and each second may have one or more segments. For example, the audio file may be of 1 minute i.e. 60 seconds, and each second, for example, may have 20 segments. Therefore, total number of segments in the audio file of 1 minutes would be 1200 segments. In some of the embodiments of the present invention, the segments are numbered from first to last in a sequence, for example, the first second of 1^{st} second may be numbered as "1", where the first segment of the 2^{nd} second may be numbered "21", in case there are 20 segments in each second. At block **716,** the method **700** includes filtering, by a filtering unit, the audio file or the recorded audio file to determine the set of frequencies in each of the segments. The audio file may comprise of a plurality of frequencies, which may not be of any relevance to the user herein. Some of the frequencies may include frequencies in the range that are not audible to the human being. Some of the frequencies may be noise, that may not be of any relevance to the user. In some of the embodiments of the present invention, the filtering unit may be defined or changed case to case basis, i.e. the frequency that the filtering unit allows may vary from audio file to another audio file. The design of the filtering unit may be changed as per the need of the filtration and depending on the nature of frequency that is needed for creating the 3D data structure of the audio file. At block **718,** the method **700** includes determining, by the processing unit, the set of frequencies in each of the segment. Once the filtration is performed by the filtering unit the unwanted frequencies or irrelevant frequencies are filtered. In some of the embodiments of the present invention, the fast fourier transform is performed on each of the segment of the audio file to determine the 2D or 2-dimensional structure of the audio file or segment. In some of the embodiments of the present invention, in order to attain better and favorable results from the fast fourier transforms, a window function on the audio sample file may be performed. This may help in reducing the spectral leakage. The spectral leakage is a term used to represent the loss of signal while performing fast fourier transform when considering chunks of original audio file or an audio file. In some of the embodiments of the present invention, the window function may help to reduce the spectral leakage by smoothing the window ends. In some of the embodiments of the present invention, the window function may be of desired configuration to attain the required efficiency herein. At block **720,** the method **700** includes determining, by the processing unit, the first threshold value for the frequency in each of the segments based on one or more of preceding and succeeding frequencies with respect to the frequency in the segment. The first threshold value may be determined for each frequency of each segment. In some of the embodiments of the present invention, the first threshold value is determined for the frequency in each segment based on one or more preceding and succeeding frequencies with respect to the frequency in the segment. In some of the embodiments of the present invention, the first threshold value of a frequency is determined based on the magnitudes of its preceding set of frequencies and succeeding set of frequencies. For example, the segment S₁ may have 40 frequencies ranging from f₁.......f₄₀. The threshold value for the frequency f₂₀ may be determined based on the magnitudes of, for example, the 5 set of frequencies preceding and succeeding frequencies i.e. f₁₅...f₁₉ and f₂₁...f₂₅, respectively. At block **722,** the method **700** includes classifying, by the processing unit, the frequencies into a binary value with respect to a first threshold value. In some of the embodiments of the present invention, the set of frequencies are classified to a binary value "0" or "1" with respect to the first threshold value. At block **724,** the method **700** includes storing, by a storage unit, the number of segments, the set of frequencies or frequencies in each segment, and the classified binary value of each of the frequency in each of the segment. In some of the embodiments of the present invention, the 3D or 3-dimenaional data of an audio file includes number of segments in the audio file, the set of frequencies or frequency in each segment and the classified binary value of the frequency in the segment. In some of the embodiments of the present invention, the storage unit may be internal to the computing device or may be external like a server that may be connected wirelessly through different technologies known in the art. At block **726,** the method **700** includes mapping, by the processing unit, the number of segments in the audio file, the set of frequencies in each of the segments of the audio file, and the classified binary value of each of the frequency in each of the segments of the audio file to form a classified frequency indexes file of the audio file or to form 3D structure of the audio file. In some of the embodiments of the present invention, the classified frequency indexes file or CFI represents the 3-dimensional data structure of the audio file, wherein the number of segments being the first dimension, the set of frequencies or frequencies being the second dimension, and the classified binary value of each of the frequency being the third dimension.

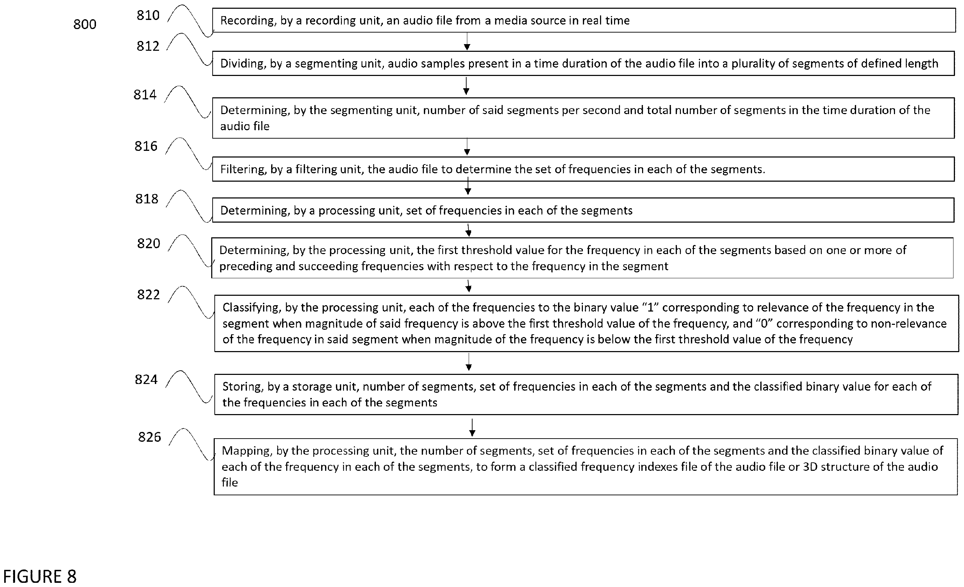

**Figure 8** is a flow diagram that illustrates an example method **800** disclosing determining a 3D data structure of an audio file or a recorded audio file with first threshold value and binary value of frequencies, according to an embodiment of the present disclosure. At block **810,** the method **800** includes recording, by a recording unit, an audio file from a media source in real time. In some of the embodiments of the present invention, the media source may be a theater playing a movie, or TV playing a series or the like with or without a video track in it. In some of the embodiments of the present invention, the recorded audio file may be a small audio track recorded at the moment when the user is watching the movie or series or the like. In some of the embodiments of the present invention, the recorded audio track may be stored in internal storage unit of the computing device or may be external like server or the like. At block **812,** the method **800** includes dividing, by a segmentation unit, the audio samples present in a time duration of the audio file into a plurality of segments. The segments may be of defined length. At block **814,** the method **800** includes determining, by a segmentation unit, the number of said segments per second and total number of segments in the time duration of the audio file. In some of the embodiments, the entire length of the audio file may be divided into seconds and each second may have one or more segments. For example, the audio file may be of 1 minute i.e. 60 seconds, and each second, for example, may have 20 segments. Therefore, total number of segments in the audio file of 1 minutes would be 1200 segments. In some of the embodiments of the present invention, the segments are numbered from first to last in a sequence, for example, the first second of 1^{st} second may be numbered as "1", where the first segment of the 2^{nd} second may be numbered "21", in case there are 20 segments in each second. At block **816,** the method **800** includes filtering, by a filtering unit, the audio file or the recorded audio file to determine the set of frequencies in each of the segments. The audio file may comprise of a plurality of frequencies, which may not be of any relevance to the user herein. Some of the frequencies may include frequencies in the range that are not audible to the human being. Some of the frequencies may be noise, that may not be of any relevance to the user. In some of the embodiments of the present invention, the filtering unit may be defined or changed case to case basis, i.e. the frequency that the filtering unit allows may vary from audio file to another audio file. The design of the filtering unit may be changed as per the need of the filtration and depending on the nature of frequency that is needed for creating the 3D data structure of the audio file. At block **818,** the method **800** includes determining, by the processing unit, the set of frequencies in each of the segment. Once the filtration is performed by the filtering unit the unwanted frequencies or irrelevant frequencies are filtered. In some of the embodiments of the present invention, the fast fourier transform is performed on each of the segment of the audio file to determine the 2D or 2-dimensional structure of the audio file or segment. In some of the embodiments of the present invention, in order to attain better and favorable results from the fast fourier transforms, a window function on the audio sample file may be performed. This may help in reducing the spectral leakage. The spectral leakage is a term used to represent the loss of signal while performing fast fourier transform when considering chunks of original audio file or an audio file. In some of the embodiments of the present invention, the window function may help to reduce the spectral leakage by smoothing the window ends. In some of the embodiments of the present invention, the window function may be of desired configuration to attain the required efficiency herein. At block **820,** the method **800** includes determining, by the processing unit, the first threshold value for the frequency in each of the segments based on one or more of preceding and succeeding frequencies with respect to the frequency in the segment. The first threshold value may be determined for each frequency of each segment. In some of the embodiments of the present invention, the first threshold value is determined for the frequency in each segment based on one or more preceding and succeeding frequencies with respect to the frequency in the segment. In some of the embodiments of the present invention, the first threshold value of a frequency is determined based on the magnitudes of its preceding set of frequencies and succeeding set of frequencies. For example, the segment S₁ may have 40 frequencies ranging from f₁.......f₄₀. The threshold value for the frequency f₂₀ may be determined based on the magnitudes of, for example, the 5 set of frequencies preceding and succeeding frequencies i.e. f₁₅... f₁₉ and f₂₁...f₂₅, respectively. At block **822,** the method **800** includes classifying, by the processing unit, the each of the frequencies to the binary value "1" corresponding to relevance of the frequency in the segment when magnitude of the frequency is above the first threshold value of the frequency, and "0" corresponding to non-relevance of the frequency in the segment when magnitude of the frequency is below the first threshold value of the frequency. For example, the segment S₁ may have 40 frequencies ranging from f₁.......f₄₀. The threshold value for the frequency f₂₀ may be determined based on the magnitudes of, for example, the 5 set of frequencies preceding and succeeding frequencies i.e. f₁₅... f₁₉ and f₂₁...f₂₅, respectively. Thereafter, the magnitude of the frequency is compared, for example, f₂₀ here, with the first threshold value of the frequency so determined. If the magnitude of the frequency, for example f₂₀, is above the first threshold value, the frequency is classified, for example f₂₀, to a binary value "1". In case, the magnitude of the frequency, for example f₂₀, is below the first threshold value, the frequency is classified, for example f₂₀, to a binary value "0". In some of the embodiments of the present invention, the classification of each of the frequency in each of the segment to the binary value "1" corresponds to relevance of the frequency in the segment when magnitude of the frequency is above the first threshold value of the frequency. Whereas the classification of the frequency in each of the segment to the binary value "0" corresponds to non-relevance of the frequency in the segment when magnitude of the frequency is below the first threshold value of the frequency. In some of the embodiments of the present invention, the frequency with binary value "1" may be termed as classified frequency, and whereas the frequency with binary value "0" may be termed as non-classified frequency. At block **824,** the method **800** includes storing, by a storage unit, the number of segments, the set of frequencies or frequencies in each segment, and the classified binary value of each of the frequency in each of the segment. In some of the embodiments of the present invention, the 3D or 3-dimenaional data of an audio file includes number of segments in the audio file, the set of frequencies or frequency in each segment and the classified binary value of the frequency in the segment. In some of the embodiments of the present invention, the storage unit may be internal to the computing device or may be external like a server that may be connected wirelessly through different technologies known in the art. At block **824,** the method **800** includes mapping, by the processing unit, the number of segments in the audio file, the set of frequencies in each of the segments of the audio file, and the classified binary value of each of the frequency in each of the segments of the audio file to form a classified frequency indexes file of the audio file or to form 3D data structure of the audio file. In some of the embodiments of the present invention, the classified frequency indexes file or CFI represents the 3-dimensional data structure of the audio file, wherein the number of segments being the first dimension, the set of frequencies or frequencies being the second dimension, and the classified binary value of each of the frequency being the third dimension.

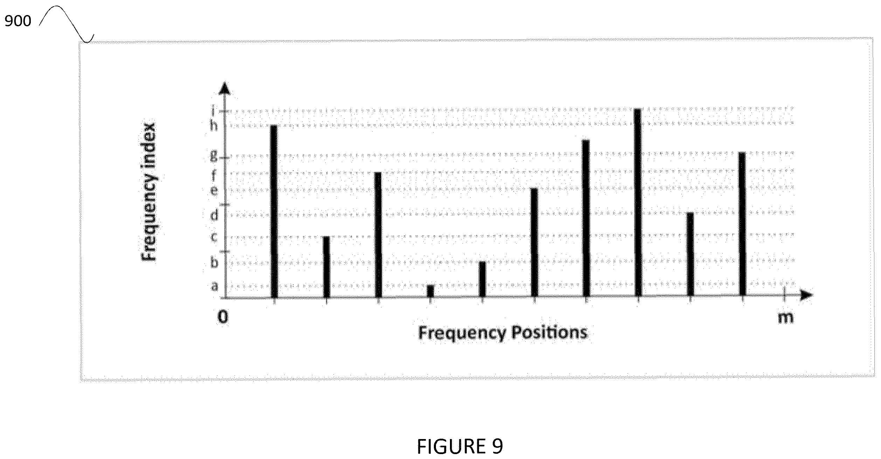

**Figure 9** is an illustration of an exemplary scenario **900,** according to an embodiment of the present disclosure, depicting time segment in an audio file. The audio file may be downloaded in a computing device from a server or a storage unit. Figure 9 shows a 3-dimensional data structure of an audio file. In some of the embodiments of the present invention, the 3-dimensional data structure or the classified frequency indexes file i.e. CFI file may include number of segments as the first dimension, the set of frequencies or frequencies as the second dimension, and the position value of each of the frequency as the third dimension. For example, Figure 9 shows the 3-D CFI Segment Structure of an audio track. In the segment structure, the X axis represents position value of the frequency, and whereas the Y axis represents set of frequencies or frequencies, for example, a,b,c,d,....i. The Z axis represents the segment number for time information of the audio file. The "m" is a configurable constant that represents number of positions or position value of the frequency to consider while generation of the 3D CFI file. The value of "m" is always less than "k", wherein "k" may be a configurable constant that represents the maximum frequencies that may be considered while generating the 3D CFI file of the audio file.

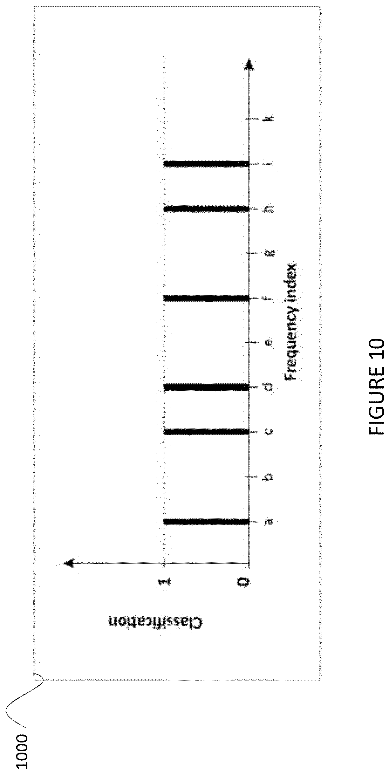

**Figure 10** is an illustration of an exemplary scenario **1000,** according to an embodiment of the present disclosure, depicting classification of set of frequencies in a time segment of an audio file or a recorded audio file. Figure 10 shows a 3-dimensional data structure of a recorded audio file. In some of the embodiments of the present invention, the 3-dimensional data structure or the classified frequency indexes file i.e. CFI file may include number of segments as the first dimension, the set of frequencies or frequencies as the second dimension, and the classified binary value of each of the frequency as the third dimension. For example, Figure 10 shows the 3-D CFI Segment Structure of an audio track that may be recorded from an external or an internal media file. In the segment structure, the X axis represents set of frequencies or frequencies, for example, a,b,c,d,....i., whereas the Y axis represents classified binary value of the frequencies. The Z axis represents the segment number for time information of the audio file. The value of "k" may be a configurable constant value that represents the maximum frequencies that may be considered while generating the 3D CFI file of the audio file or the recorded audio file. For example, the frequency "a" may have a classified binary value "1", whereas the frequency "b" may have a classified binary value "0". In some of the embodiments of the present invention, the frequencies, for example, a, c, d, f, h and i may have binary value "1", reflecting that they are relevant to the user, whereas for example, frequencies b, e, g may have binary value "0", reflecting that they are not relevant to the user.

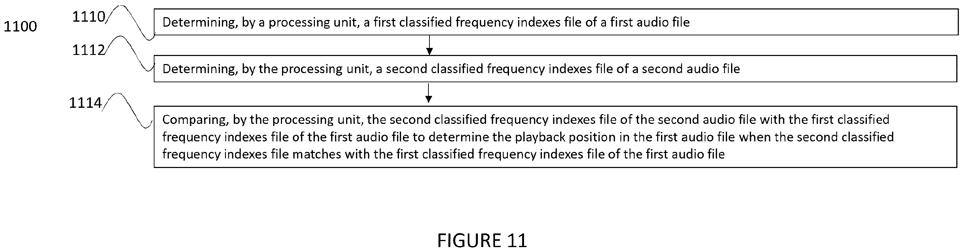

**Figure 11** is a flow diagram that illustrates an example method **1100** disclosing determining a playback position in a first audio file based on a second audio file. In some of the embodiments of the present invention, the first audio may be downloaded or stored in a computing device from a server through wireless or wired technologies already known in the art. In some of the embodiments of the present invention, the second audio may be recorded by a recording unit in a computation device by a user, as desired by the user from an external media file. At block **1110,** the method **1100** includes determining, by a processing unit, a first classified frequency indexes (CFI) file of a first audio file. In some of the embodiments of the present invention, the first classified frequency indexes (CFI) file of the first audio file may be determined based on the steps as disclosed above in the Figure 5 by performing the steps **510-524.** The first audio file may be already existing audio file, alternative audio file that may be either dubbed or enhanced audio file or the like. At block **1112,** the method **1100** includes determining, by the processing unit, a second classified frequency indexes (CFI) file of a second audio file. In some of the embodiments of the present invention, the second audio file may be a recorded audio file. In some of the embodiments of the present invention, the second classified frequency indexes file may be determined based on the steps as disclosed above in Figure 6 by performing the steps **610-624.** In some of the embodiments of the present invention, the second classified frequency indexes file may be determined based on the steps as disclosed above in Figure 7 by performing the steps **710-726.** In some of the embodiments of the present invention, the second classified frequency indexes file may be determined based on the steps as disclosed above in Figure 8 by performing the steps **810-826.** At block **1114,** the method **1100** includes comparing, by the processing unit, the second classified frequency indexes file of the second audio file with the first classified frequency indexes file of the first audio file. In some of the embodiments of the present invention, the comparison determines the playback position in the first audio file when the second classified frequency indexes file matches with the first classified frequency indexes file of the first audio file.

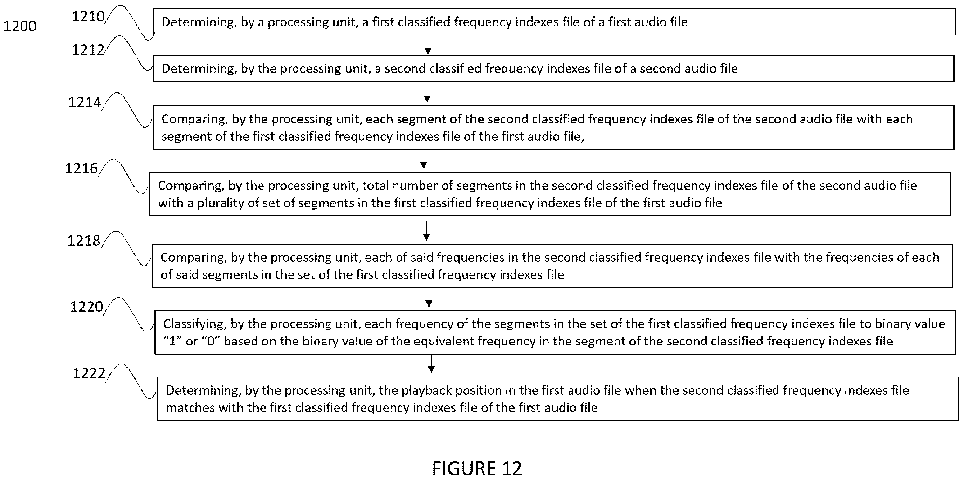

**Figure 12** is a flow diagram that illustrates an example method **1200** disclosing determining a playback position in a first audio file based on a second audio file by comparing frequencies of both the audio files. In some of the embodiments of the present invention, the first audio may be downloaded or stored in a computing device from a server through wireless or wired technologies already known in the art. In some of the embodiments of the present invention, the second audio may be recorded by a recording unit in a computation device by a user from an external media file. At block **1210,** the method **1200** includes determining, by a processing unit, a first classified frequency indexes (CFI) file of a first audio file. In some of the embodiments of the present invention, the first classified frequency indexes (CFI) file of the first audio file may be determined based on the steps as disclosed above in the Figure 5 by performing the steps **510-524.** The first audio file may be already existing audio file, alternative audio file that may be either dubbed or enhanced audio file or the like. At block **1212,** the method **1200** includes determining, by the processing unit, a second classified frequency indexes (CFI) file of a second audio file. In some of the embodiments of the present invention, the second audio file may be a recorded audio file. In some of the embodiments of the present invention, the second classified frequency indexes file may be determined based on the steps as disclosed above in Figure 6 by performing the steps **610-624.** In some of the embodiments of the present invention, the second classified frequency indexes file may be determined based on the steps as disclosed above in Figure 7 by performing the steps **710-726.** In some of the embodiments of the present invention, the second classified frequency indexes file may be determined based on the steps as disclosed above in Figure 8 by performing the steps **810-826.** At block **1214,** the method **1200** includes comparing, by the processing unit, each segment of the second classified frequency indexes file with each segment of the first classified frequency indexes file. In some of the embodiments of the present invention, the second classified indexes file, for example, may have 50 segments ranging from S₁, S₂, S₃......S₅₀, whereas the first classified indexes file, for example, may have 500 segments ranging from s₁, s₂, s₃, ...... s₅₀₀. The segment, for example, S₁, may be compared with the segments s₁-s₅₀₀, the segment, for example, S₂ may be compared with the segments s₁-s₅₀₀, likewise, the segment, for example, Ssomay be compared with the segments s₁-s₅₀₀. At block **1216,** the method **1200** includes comparing, by the processing unit, the total number of segments in the second classified frequency indexes file of the second audio file with a plurality of set of segments in the first classified frequency indexes file of the first audio file. In some of the embodiments of the present invention, one or more set of segments are created in the first classified frequency indexes file such that each set includes number of segments equal to number of segments in the second classified frequency indexes file of the second audio. For example, the number of segments in the second classified frequency indexes file may be 20, then the number of segments in each set of the segments in the first classified frequency indexes file may be 20. In some of the embodiments of the present invention, the subsequent sets of segments are formed in the first classified frequency indexes file by replacing the first segment of the set with the second segment of the set, second segments with the third, and likewise, the last second segment with the last segment of the set. Further, adding the segment adjacent to the last segment set to equal the total number of segments in the set with total number of segments in the second classified frequency indexes file. For example, the number of total segments in the second classification indexes file may be 10 i.e. S₁-S₁₀. The total number of segments, for example, in the first classification frequency indexes file, may be 15 i.e. s₁-s₁₅. Therefore, in this case, each set of segments in first classified frequency indexes file may include 10 segments. The first set of segments in first classified frequency indexes file may be s₁-s₁₀ with s₁ being the first segment of the set. The second set of segments may be s₂-s₁₁ with s₂ being the first segment of the second set. Likewise the last set of segments may be s₆-s₁₅. Therefore, total number of sets herein may be 6. At block **1218,** the method **1200** includes comparing, by the processing unit, each of the frequencies in the second classified frequency indexes file with the frequencies of each of the segments in the set of the first classified frequency indexes file. In some of the embodiments of the present invention, while comparing the total segments in the second frequency indexes file with the set of segments of the first frequency indexes file, the frequency of each segment of the second classified frequency indexes file is compared with the frequencies of the segments of the set of segments of first classified frequency indexes file. For example, the number of total segments in the second classification indexes file may be 2 i.e. S₁-S₂. The frequencies in S₁ may be a,b,c,d...g, and the frequencies in S₂ may be p,q,r,s....z. Likewise, the number of segments in first classified frequency indexes file may be, for example, 5 i.e. s₁-s₅. The frequencies in s₁ may be A,B,C,D.....H, the frequencies in s₂ may be J,K,L,M..P, the frequencies in s₃ may be G,H,I,J... M, the frequencies in s₄ may be T,U,V... Z, and the frequencies in ss may be M,N,P... T. Therefore, there may be 4 set of segments in the first classified frequency indexes file i.e. first set being s₁-s₂, second being s₂-s₃, like wise last set being s₄-s₅. Therefore, while comparing the segments of second classified frequency indexes file S1-S2 with the set of segments, for example, 4 sets herein, the frequency of the segments are compared. For example, while comparing the S₁-S₂ with s₁-s₂, their frequencies are compared. The frequencies of S₁ i.e. a,b,c,d... g, and the frequencies of S₂ i.e. p,q,r,s....z are compared with, for example, the first set of segments of first classified frequency indexes file i.e. s₁ i.e. A,B,C,D.....H, and the frequencies of s₂ i.e. J,K,L,M..P, respectively. Likewise, the rest of the frequencies of the segments are also compared with the segments of the set of segments of the first classified frequency indexes file. At block **1220,** the method **1200** includes classifying, by the processing unit, each frequency of the segments in the set of the first classified frequency indexes file to binary value "1" or "0" based on the binary value of the equivalent frequency in the segment of the second classified frequency indexes file. In some of the embodiments of the present invention, the frequencies of the segments of the second classified frequency indexes file may be classified into a binary value based on their magnitude being above or below the first threshold value, respectively. The frequencies of the segments of the second classified frequency indexes file may be compared with the frequencies of the set of segments of the first classified frequency indexes file and accordingly, if there is a match of frequency, the binary value of the frequency of the second classified frequency indexes file will be assigned to the frequency of the first classified frequency indexes file. Thereby, the frequencies of segments of the first classified frequency indexes file may also have equivalent binary value. In some of the embodiments of the present invention, Figure 9 and 10 shows, for example, the data structure of a first audio file and a second audio file, respectively. The 3D data structure of the first audio as shown in Figure 9, may comprise frequencies a, b, c, d, e, f, g, h, i. However, when compared with the second audio file or the recorded audio file, as shown in Figure 10, it may be observed that only a, c, d, f, h, i have a value of 1 in the binary graph, i.e. the frequencies a, c, d, f, h, i are classified in the second audio or it may also be interpreted that amongst the frequencies a, b, c, d, e, f, g, h, I in the first audio only a, c, d, f, h, i have value "1". At block **1222,** the method **1200** includes determining, by the processing unit, the playback position in the first audio file when the second classified frequency indexes file matches with the first classified frequency indexes file of the first audio file.

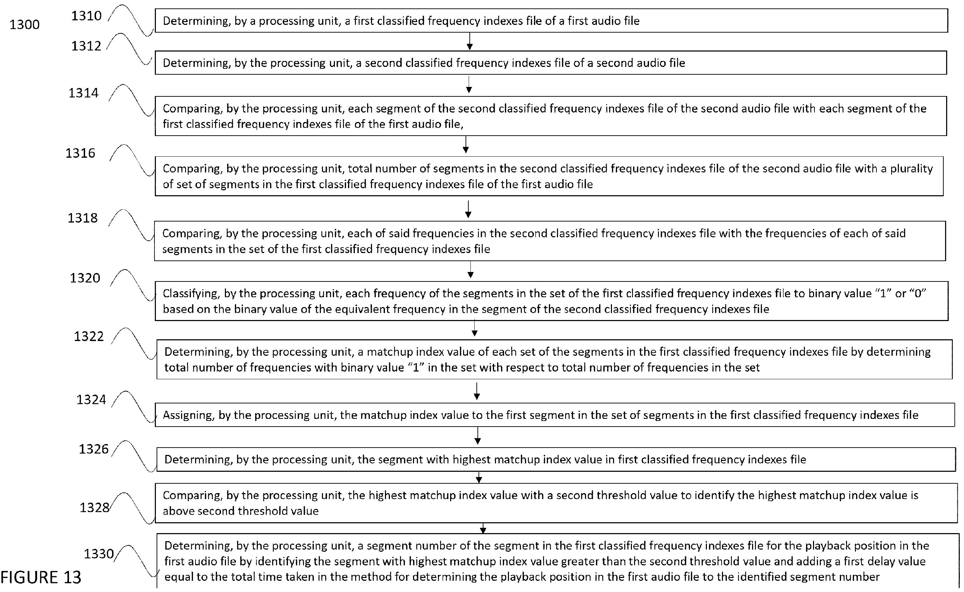

**Figure 13** is a flow diagram that illustrates an example method **1300** disclosing determining a playback position in a first audio file based on a second audio file by determining the segment with highest match up index value. In some of the embodiments of the present invention, the first audio may be downloaded or stored in a computing device from a server through wireless or wired technologies already known in the art. In some of the embodiments of the present invention, the second audio may be recorded by a recording unit in a computation device by a user from an external media file. At block **1310,** the method **1300** includes determining, by a processing unit, a first classified frequency indexes (CFI) file of a first audio file. In some of the embodiments of the present invention, the first classified frequency indexes (CFI) file of the first audio file may be determined based on the steps as disclosed above in the Figure 5 by performing the steps **510-524.** The first audio file may be already existing audio file, alternative audio file that may be either dubbed or enhanced audio file or the like. At block **1312,** the method **1300** includes determining, by the processing unit, a second classified frequency indexes (CFI) file of a second audio file. In some of the embodiments of the present invention, the second audio file may be a recorded audio file. In some of the embodiments of the present invention, the second classified frequency indexes file may be determined based on the steps as disclosed above in Figure 6 by performing the steps **610-624.** In some of the embodiments of the present invention, the second classified frequency indexes file may be determined based on the steps as disclosed above in Figure 7 by performing the steps **710-726.** In some of the embodiments of the present invention, the second classified frequency indexes file may be determined based on the steps as disclosed above in Figure 8 by performing the steps **810-826.** At block **1314,** the method **1300** includes comparing, by the processing unit, each segment of the second classified frequency indexes file with each segment of the first classified frequency indexes file. In some of the embodiments of the present invention, the second classified indexes file, for example, may have 50 segments ranging from S₁, S₂, S₃......S₅₀, whereas the first classified indexes file, for example, may have 500 segments ranging from s₁, s₂, s₃, ......s₅₀₀. The segment, for example, S₁, may be compared with the segments s₁-s₅₀₀, the segment, for example, S₂ may be compared with the segments s₁-s₅₀₀, likewise, the segment, for example, S₅₀ may be compared with the segments s₁-s₅₀₀. At block **1316,** the method **1300** includes comparing, by the processing unit, the total number of segments in the second classified frequency indexes file of the second audio file with a plurality of set of segments in the first classified frequency indexes file of the first audio file. In some of the embodiments of the present invention, one or more set of segments are created in the first classified frequency indexes file such that each set includes number of segments equal to number of segments in the second classified frequency indexes file of the second audio. For example, the number of segments in the second classified frequency indexes file may be 20, then the number of segments in each set of the segments in the first classified frequency indexes file may be 20. In some of the embodiments of the present invention, the subsequent sets of segments are formed in the first classified frequency indexes file by replacing the first segment of the set with the second segment of the set, second segments with the third, and likewise, the last second segment with the last segment of the set. Further, adding the segment adjacent to the last segment set to equal the total number of segments in the set with total number of segments in the second classified frequency indexes file. For example, the number of total segments in the second classification indexes file may be 10 i.e. Si-Sio. The total number of segments, for example, in the first classification frequency indexes file, may be 15 i.e. s₁-s₁₅. Therefore, in this case, each set of segments in first classified frequency indexes file may include 10 segments. The first set of segments in first classified frequency indexes file may be s₁-s₁₀ with s₁ being the first segment of the set. The second set of segments may be s₂-s₁₁ with s₂ being the first segment of the second set. Likewise the last set of segments may be s₆-s₁₅. Therefore, total number of sets herein may be 6. At block **1318,** the method **1300** includes comparing, by the processing unit, each of the frequencies in the second classified frequency indexes file with the frequencies of each of the segments in the set of the first classified frequency indexes file. In some of the embodiments of the present invention, while comparing the total segments in the second frequency indexes file with the set of segments of the first frequency indexes file, the frequency of each segment of the second classified frequency indexes file is compared with the frequencies of the segments of the set of segments of first classified frequency indexes file. For example, the number of total segments in the second classification indexes file may be 2 i.e. S₁-S₂. The frequencies in S₁ may be a,b,c,d...g, and the frequencies in S₂ may be p,q,r,s....z. Likewise, the number of segments in first classified frequency indexes file may be, for example, 5 i.e. si-ss .The frequencies in s₁ may be A,B,C,D.....H, the frequencies in s₂ may be J,K,L,M..P, the frequencies in s₃ may be G,H,I,J... M, the frequencies in s₄ may be T,U,V... Z, and the frequencies in ss may be M,N,P... T. Therefore, there may be 4 set of segments in the first classified frequency indexes file i.e. first set being s₁-s₂, second being s₂-s₃, like wise last set being s₄-s₅. Therefore, while comparing the segments of second classified frequency indexes file S1-S2 with the set of segments, for example, 4 sets herein, the frequency of the segments are compared. For example, while comparing the S₁-S₂ with s₁-s₂, their frequencies are compared. The frequencies of S₁ i.e. a,b,c,d... g, and the frequencies of S₂ i.e. p,q,r,s....z are compared with, for example, the first set of segments of first classified frequency indexes file i.e. s₁ i.e. A,B,C,D.....H, and the frequencies of s₂ i.e. J,K,L,M..P, respectively. Likewise, the rest of the frequencies of the segments are also compared with the segments of the set of segments of the first classified frequency indexes file. At block **1320,** the method **1300** includes classifying, by the processing unit, each frequency of the segments in the set of the first classified frequency indexes file to binary value "1" or "0" based on the binary value of the equivalent frequency in the segment of the second classified frequency indexes file. In some of the embodiments of the present invention, the frequencies of the segments of the second classified frequency indexes file may be classified into a binary value based on their magnitude being above or below the first threshold value, respectively. The frequencies of the segments of the second classified frequency indexes file may be compared with the frequencies of the set of segments of the first classified frequency indexes file and accordingly, if there is a match of frequency, the binary value of the frequency of the second classified frequency indexes file will be assigned to the frequency of the first classified frequency indexes file. Thereby, the frequencies of segments of the first classified frequency indexes file may also have equivalent binary value. In some of the embodiments of the present invention, Figure 9 and 10 shows, for example, the data structure of a first audio file and a second audio file, respectively. The 3D data structure of the first audio as shown in Figure 9, may comprise frequencies a, b, c, d, e, f, g, h, i. However, when compared with the second audio file or the recorded audio file, as shown in Figure 10, it may be observed that only a, c, d, f, h, i have a value of 1 in the binary graph, i.e. the frequencies a, c, d, f, h, i are classified in the second audio or it may also be interpreted that amongst the frequencies a, b, c, d, e, f, g, h, I in the first audio only a, c, d, f, h, i have value "1". At block **1322,** the method **1300** includes determining, by the processing unit, a matchup index value of each set of the segments in the first classified frequency indexes file. In some of the embodiments of the present invention, the matchup index value of each segment of the first classified frequency indexes file may be determined by determining the total number of frequencies with binary value "1" in the set of segments with respect to the total number of frequencies in the set of the segments of the first classified frequency indexes file. In some of the embodiments of the present invention, the set of segments may include, for example, 20 segments, and in which each segment may include frequencies with binary value "1" or "0". The matchup index value is determined for a particular set by taking a ratio of number of frequencies in the set with binary value "1" and the total number of frequencies in the set. For example, the total number frequencies in, for example, the set of 20 segments may be 50, whereas, out of 50 frequencies, the frequencies with binary value "1" is 25, then the matchup index value for the set with 20 segments may be the ratio of 25 by 50, i.e. 0.5 value. At block **1324,** the method **1300** includes assigning, by the processing unit, the matchup index value to the first segment in the set of segments in the first classified frequency indexes file. In some of the embodiments of the present invention, the matchup index value determined based on the number of frequencies with binary value "1" with respect to total number of frequencies in the set, may be assigned to the first segment of the set of segments. For example, the total number segments in a set may be 20 i.e. S₁, S₂..S₂₀, and the frequencies in, for example, the set of 20 segments may be 50 i.e. f₁, f₂...f₅₀, whereas, out of 50 frequencies, the frequencies with binary value "1" is 25 i.e. f₁, f₂, f₂₀, f₂₂, f₂₉...f₅₀, then the matchup index value for the set with 20 segments may be the ratio of 25 by 50, i.e. 0.5 value, The matchup index value of the set i.e. 0.5 value may be assigned to the first segment, for example, S₁ of the set. Likewise, the matchup index value may be determined and assigned to the first segment of other set of segments as well. At block **1326,** the method 1300 includes determining, by the processing unit, the segment with highest matchup index value in first classified frequency indexes file. In some of the embodiments of the present invention, there may be one or more set of segments in the first classified frequency indexes file. For example, the first set may have segments S₁-S₂₀, the second set may have S₂-S₂₁, the third set may have segments S₃-S₂₂ and the like. Therefore, the matchup index value for the first set so determined may be assigned to the segment S₁ being the first segment of the first set. The matchup index value for the second set so determined may be assigned to the segment S₂ being the first segment of the second set. Likewise, the matchup index value for the third set so determined may be assigned to the segment S₃ being the first segment of the third set. At block **1328,** the method **1300** includes comparing, by the processing unit, the highest matchup index value with a second threshold value to identify whether the highest matchup index value is above second threshold value or not. In some of the embodiments of the present invention, the second threshold value may be predefined by the user. In some of the embodiments of the present invention, the second threshold value may be predefined by the user and may be based on or depend on the nature of audio file or track. For example, in the case the audio file has lower magnitude of frequencies, the second threshold value may be a lower value, whereas in the audio file have frequencies with higher magnitude, the second threshold value may be a higher value. In case, the audio file includes audio track, for example, for action sequences or chase sequences, the frequencies may have higher magnitude, and therefore the second threshold value may be a higher value. In case, the audio file includes audio track, for example, for silence scene or suspense scene, the frequencies may have lower magnitude and therefore, the second threshold value for the audio file may have a lower value. At block **1330,** the method **1300** includes determining, by the processing unit, a segment number of the segment in the first classified frequency indexes file for determining the playback position in the first audio file. In some of the embodiments of the present invention, the segment number is identified by identifying the segment with the highest matchup index value assigned to the segment, which is greater than the second threshold value. In some of the embodiment of the present invention, once the segment number of the segment with highest matchup index value is identified, a first delay value equal to the total time taken in determining the playback position in the first audio file may added to the identified segment number. The resulted segment may be then considered as a playback position for the playing of the first audio. In some of the embodiments of the present invention, the first delay may be a time delay or delay or time consumed in the method for determining the playback position. For example, the first classified frequency indexes file of the audio file of, for example, 20 seconds may have 100 segments S₁-S₁₀₀ i.e. each second may have 5 segments. The segment Sio, for example, may have highest matchup index value. The first delay or the time delay, for example, may be of 1 second, then the playback position herein may be number of the segment with highest matchup index value i.e. Sio and the first delay or time delay herein, for example, 1 second. Therefore, the playback position herein may be S₁₅. The playback position in the first audio file may be from segment S₁₅ of the first classified frequency indexes file.

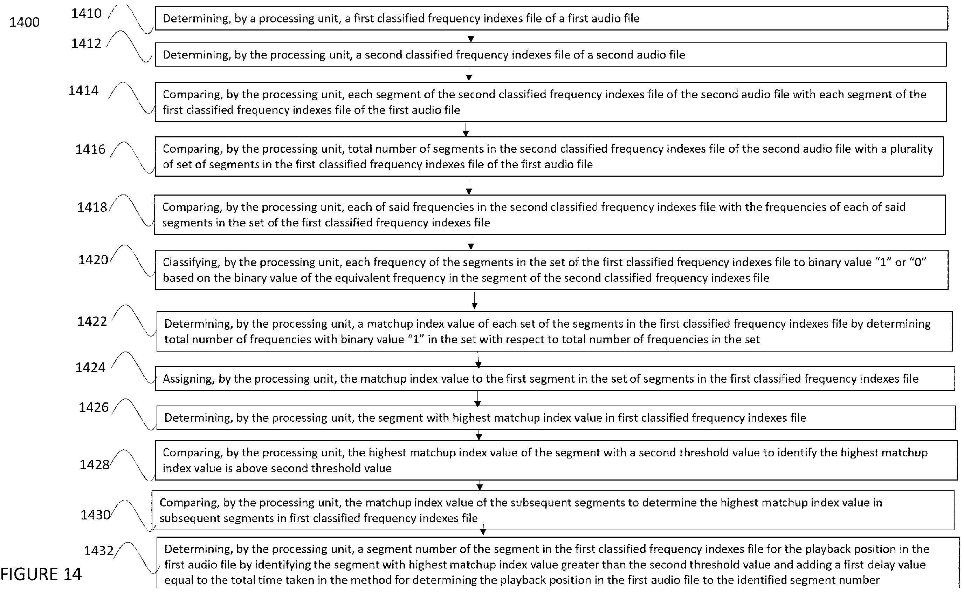

**Figure 14** is a flow diagram that illustrates an example method **1400** disclosing determining a playback position in a first audio file based on a second audio file by determining the subsequent segments with highest match up index value. In some of the embodiments of the present invention, the first audio may be downloaded or stored in a computing device from a server through wireless or wired technologies already known in the art. In some of the embodiments of the present invention, the second audio may be recorded by a recording unit in a computation device by a user from an external media file. At block **1410,** the method **1400** includes determining, by a processing unit, a first classified frequency indexes (CFI) file of a first audio file. In some of the embodiment of the present invention, the first classified frequency indexes (CFI) file of the first audio file may be determined based on the steps as disclosed above in the Figure 5 by performing the steps **510-524.** The first audio file may be already existing audio file, alternative audio file that may be either dubbed or enhanced audio file or the like. At block **1412,** the method **1400** includes determining, by the processing unit, a second classified frequency indexes (CFI) file of a second audio file. In some of the embodiments of the present invention, the second audio file may be a recorded audio file. In some of the embodiments of the present invention, the second classified frequency indexes file may be determined based on the steps as disclosed above in Figure 6 by performing the steps **610-624.** In some of the embodiments of the present invention, the second classified frequency indexes file may be determined based on the steps as disclosed above in Figure 7 by performing the steps **710-726.** In some of the embodiments of the present invention, the second classified frequency indexes file may be determined based on the steps as disclosed above in Figure 8 by performing the steps **810-826.** At block **1414,** the method **1400** includes comparing, by the processing unit, each segment of the second classified frequency indexes file with each segment of the first classified frequency indexes file. In some of the embodiments of the present invention, the second classified indexes file, for example, may have 50 segments ranging from S₁, S₂, S₃......S₅₀, whereas the first classified indexes file, for example, may have 500 segments ranging from s₁, s₂, s₃, ......s₅₀₀. The segment, for example, S₁, may be compared with the segments s₁-s₅₀₀, the segment, for example, S₂ may be compared with the segments s₁-s₅₀₀, likewise, the segment, for example, S₅₀ may be compared with the segments s₁-s₅₀₀. At block **1416,** the method **1400** includes comparing, by the processing unit, the total number of segments in the second classified frequency indexes file of the second audio file with a plurality of set of segments in the first classified frequency indexes file of the first audio file. In some of the embodiments of the present invention, one or more set of segments are created in the first classified frequency indexes file such that each set includes number of segments equal to number of segments in the second classified frequency indexes file of the second audio. For example, the number of segments in the second classified frequency indexes file may be 20, then the number of segments in each set of the segments in the first classified frequency indexes file may be 20. In some of the embodiments of the present invention, the subsequent sets of segments are formed in the first classified frequency indexes file by replacing the first segment of the set with the second segment of the set, second segments with the third, and likewise, the last second segment with the last segment of the set. Further, adding the segment adjacent to the last segment set to equal the total number of segments in the set with total number of segments in the second classified frequency indexes file. For example, the number of total segments in the second classification indexes file may be 10 i.e. S₁-S₁₀. The total number of segments, for example, in the first classification frequency indexes file, may be 15 i.e. s₁-s₁₅. Therefore, in this case, each set of segments in first classified frequency indexes file may include 10 segments. The first set of segments in first classified frequency indexes file may be s₁-s₁₀ with s₁ being the first segment of the set. The second set of segments may be s₂-s₁₁ with s₂ being the first segment of the second set. Likewise the last set of segments may be s₆-s₁₅. Therefore, total number of sets herein may be 6. At block **1418,** the method **1400** includes comparing, by the processing unit, each of the frequencies in the second classified frequency indexes file with the frequencies of each of the segments in the set of the first classified frequency indexes file. In some of the embodiments of the present invention, while comparing the total segments in the second frequency indexes file with the set of segments of the first frequency indexes file, the frequency of each segment of the second classified frequency indexes file is compared with the frequencies of the segments of the set of segments of first classified frequency indexes file. For example, the number of total segments in the second classification indexes file may be 2 i.e. S₁-S₂. The frequencies in S₁ may be a,b,c,d...g, and the frequencies in S₂ may be p,q,r,s....z. Likewise, the number of segments in first classified frequency indexes file may be, for example, 5 i.e. si-ss .The frequencies in s₁ may be A,B,C,D.....H, the frequencies in s₂ may be J,K,L,M..P, the frequencies in s₃ may be G,H,I,J... M, the frequencies in s₄ may be T,U,V... Z, and the frequencies in ss may be M,N,P... T. Therefore, there may be 4 set of segments in the first classified frequency indexes file i.e. first set being s₁-s₂, second being s₂-s₃, like wise last set being s₄-s₅. Therefore, while comparing the segments of second classified frequency indexes file S1-S2 with the set of segments, for example, 4 sets herein, the frequency of the segments are compared. For example, while comparing the S₁-S₂ with s₁-s₂, their frequencies are compared. The frequencies of S₁ i.e. a,b,c,d... g, and the frequencies of S₂ i.e. p,q,r,s....z are compared with, for example, the first set of segments of first classified frequency indexes file i.e. s₁ i.e. A,B,C,D.....H, and the frequencies of s₂ i.e. J,K,L,M..P, respectively. Likewise, the rest of the frequencies of the segments are also compared with the segments of the set of segments of the first classified frequency indexes file. At block **1420,** the method **1400** includes classifying, by the processing unit, each frequency of the segments in the set of the first classified frequency indexes file to binary value "1" or "0" based on the binary value of the equivalent frequency in the segment of the second classified frequency indexes file. In some of the embodiments of the present invention, the frequencies of the segments of the second classified frequency indexes file may be classified into a binary value based on their magnitude being above or below the first threshold value, respectively. The frequencies of the segments of the second classified frequency indexes file may be compared with the frequencies of the set of segments of the first classified frequency indexes file and accordingly, if there is a match of frequency, the binary value of the frequency of the second classified frequency indexes file will be assigned to the frequency of the first classified frequency indexes file. Thereby, the frequencies of segments of the first classified frequency indexes file may also have equivalent binary value. In some of the embodiments of the present invention, Figure 9 and 10 shows, for example, the data structure of a first audio file and a second audio file, respectively. The 3D data structure of the first audio as shown in Figure 9, may comprise frequencies a, b, c, d, e, f, g, h, i. However, when compared with the second audio file or the recorded audio file, as shown in Figure 10, it may be observed that only a, c, d, f, h, i have a value of 1 in the binary graph, i.e. the frequencies a, c, d, f, h, i are classified in the second audio or it may also be interpreted that amongst the frequencies a, b, c, d, e, f, g, h, I in the first audio only a, c, d, f, h, i have value "1". At block **1422,** the method **1400** includes determining, by the processing unit, a matchup index value of each set of the segments in the first classified frequency indexes file. In some of the embodiments of the present invention, the matchup index value of each segment of the first classified frequency indexes file may be determined by determining the total number of frequencies with binary value "1" in the set of segments with respect to the total number of frequencies in the set of the segments of the first classified frequency indexes file. In some of the embodiments of the present invention, the set of segments may include, for example, 20 segments, and in which each segment may include frequencies with binary value "1" or "0". The matchup index value is determined for a particular set by taking a ratio of number of frequencies in the set with binary value "1" and the total number of frequencies in the set. For example, the total number frequencies in, for example, the set of 20 segments may be 50, whereas, out of 50 frequencies, the frequencies with binary value "1" is 25, then the matchup index value for the set with 20 segments may be the ratio of 25 by 50, i.e. 0.5 value. At block **1324,** the method **1300** includes assigning, by the processing unit, the matchup index value to the first segment in the set of segments in the first classified frequency indexes file. In some of the embodiments of the present invention, the matchup index value determined based on the number of frequencies with binary value "1" with respect to total number of frequencies in the set, may be assigned to the first segment of the set of segments. For example, the total number segments in a set may be 20 i.e. S₁, S₂..S₂₀, and the frequencies in, for example, the set of 20 segments may be 50 i.e. f₁, f₂... fso, whereas, out of 50 frequencies, the frequencies with binary value "1" is 25 i.e. f₁, f₂, f₂₀, f₂₂, f₂₉... f₅₀, then the matchup index value for the set with 20 segments may be the ratio of 25 by 50, i.e. 0.5 value, The matchup index value of the set i.e. 0.5 value may be assigned to the first segment, for example, S₁ of the set. Likewise, the matchup index value may be determined and assigned to the first segment of other set of segments as well. At block **1426,** the method **1400** includes determining, by the processing unit, the segment with highest matchup index value in first classified frequency indexes file. In some of the embodiments of the present invention, there may be one or more set of segments in the first classified frequency indexes file. For example, the first set may have segments S₁-S₂₀, the second set may have S₂-S₂₁, the third set may have segments S₃-S₂₂ and the like. Therefore, the matchup index value for the first set so determined may be assigned to the segment S₁ being the first segment of the first set. The matchup index value for the second set so determined may be assigned to the segment S₂ being the first segment of the second set. Likewise, the matchup index value for the third set so determined may be assigned to the segment S₃ being the first segment of the third set. At block **1428,** the method **1400** includes comparing, by the processing unit, the highest matchup index value with a second threshold value to identify whether the highest matchup index value is above second threshold value or not. In some of the embodiments of the present invention, the second threshold value may be predefined. In some of the embodiments of the present invention, the second threshold value may be predefined by the user and may be based on or depend on the nature of audio file or track. For example, in the case the audio file has lower magnitude of frequencies, the second threshold value may be a lower value, whereas in the audio file have frequencies with higher magnitude, the second threshold value may be a higher value. In case, the audio file includes audio track, for example, for action sequences or chase sequences, the frequencies may have higher magnitude, and therefore the second threshold value may be a higher value. In case, the audio file includes audio track, for example, for silence scene or suspense scene, the frequencies may have lower magnitude and therefore, the second threshold value for the audio file may have a lower value. At block **1430,** the method **1400** includes comparing, by the processing unit, the matchup index value of the subsequent segments to determine the highest matchup index value in subsequent segments in first classified frequency indexes file if the number of segments with highest matchup index value is more than 1. In some of the embodiments of the present invention, there may be more than one segments with highest matchup index value, in such cases the matchup index value of the subsequent segments is determined. The subsequent segments of the segments with highest matchup index value may be compared with the subsequent segments of the other segment with highest matchup index value. In case, while comparing the subsequent segments if again more than one segments found to have highest matchup index value, the subsequent segment of this subsequent segment is again compared. This step continues until one segment with highest matchup index value is determined. In some of the embodiments of the present invention, the subsequent segments may be from same set of the first classified frequency indexes file. In some of the embodiments, the comparison of the subsequent segments may continue until all the segments of the set are compared. In some of the embodiments of the present invention, there may be 3 segments in the first classified frequency indexes file, for example, segment S₁₀, S₂₂, S₄₅, having highest matchup index value, for example, 0.8, and each set, for example, may consist of 10 segments. In such case, to identify the segment with highest matchup index value, the subsequent segments are compared, for example, segments S₁₁, S₂₃, S₄₆, respectively. Again, there may be a possibility that more than one segment may have highest match up index value. The matchup index value must be always more than the second threshold value for consideration herein. In case, the segments, for example, S₁₁ and S₂₃ may found have same highest matchup index value, in such case, the subsequent segments may be compared, for example, S₁₂ and S₂₄. In case the segment S₁₂ found to have highest matchup index value, the segment S₁₂ is considered as a segment number for determining the playback position in the first classified frequency indexes file. At block **1432,** the method **1400** includes determining, by the processing unit, a segment number of the segment in the first classified frequency indexes file for determining the playback position in the first audio file. In some of the embodiments of the present invention, the segment number is identified by identifying the segment with the highest matchup index value assigned to the segment, which is greater than the second threshold value. In some of the embodiment of the present invention, once the segment number of the segment with highest matchup index value is identified, a first delay value equal to the total time taken in determining the playback position in the first audio file may added to the identified segment number. The resulted segment may be then considered as a playback position for the playing of the first audio. In some of the embodiments of the present invention, the first delay may be a time delay or delay or time consumed in the method for determining the playback position. For example, the first classified frequency indexes file of the audio file of, for example, 20 seconds may have 100 segments Si-Sioo i.e. each second may have 5 segments. The segment Sio, for example, may have highest matchup index value. The first delay or the time delay, for example, may be of 1 second, then the playback position herein may be number of the segment with highest matchup index value i.e. Sio and the first delay or time delay herein, for example, 1 second. Therefore, the playback position herein may be S₁₅. The playback position in the first audio file may be from segment S₁₅ of the first classified frequency indexes file.

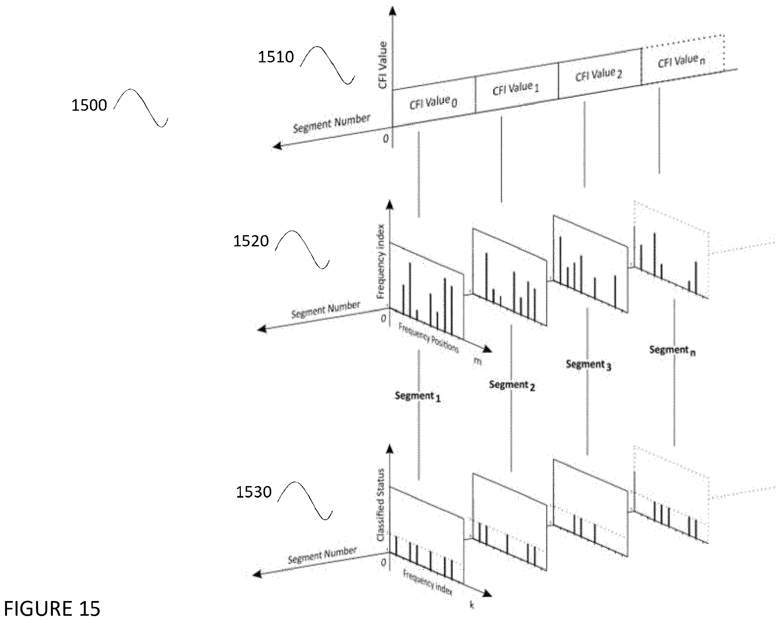

**Figure 15** is an illustration of an exemplary scenario **1500,** according to an embodiment of the present disclosure, depicting matching of segments in audio files. The classified frequency indexes file matching **1510** is shown in Figure 15. In some of the embodiments of the present invention, the first audio or an original audio **1520** may have a 3-D or 3-dimensional data structure i.e. classified frequency indexes file. The 3-dimensional data structure or the classified frequency indexes file i.e. CFI file of the first audio or original audio **1520** may include number of segments as the first dimension, the set of frequencies or frequencies as the second dimension, and the position value of each of the frequency as the third dimension. For example, Figure 15 shows the 3-D CFI Segment Structure of a first audio or original audio **1520.** In the segment structure, the X axis represents position value of the frequency or frequency position, and whereas the Y axis represents set of frequencies or frequencies or frequency indexes. The Z axis represents the segment number for time information of the audio file. The "m" is a configurable constant that represents number of positions or position value of the frequency to consider while generation of the 3D CFI file. The value of "m" is always less than "k", wherein "k" may be a configurable constant that represents the maximum frequencies that may be considered while generating the 3D CFI file of the audio file. Figure 15 also shows the 3-D data structure of a second audio or a recorded audio **1530.** In some of the embodiments of the present invention, the 3-dimensional data structure or the classified frequency indexes file of the second audio or the recorded audio **1530** i.e. CFI file may include number of segments as the first dimension, the set of frequencies or frequencies as the second dimension, and the classified binary value of each of the frequency as the third dimension. For example, Figure 15 shows the 3-D CFI Segment Structure of a second audio or the recorded audio **1530,** wherein the X axis represents set of frequencies or frequencies or frequency indexes, whereas the Y axis represents classified binary value of the frequencies or the classified status. The Z axis represents the segment number for time information of the audio file. The value of "k" may be a configurable constant value that represents the maximum frequencies that may be considered while generating the 3D CFI file of the audio file or the recorded audio file. The value of "k" may be lower than the Nyquist frequency. In some of the embodiments of the present invention, the CFI file of the first audio or original audio **1520** and the CFI file of the second audio or the recorded audio **1530,** may be mapped **1510,** to determine the playback position in the first audio or the recorded audio.

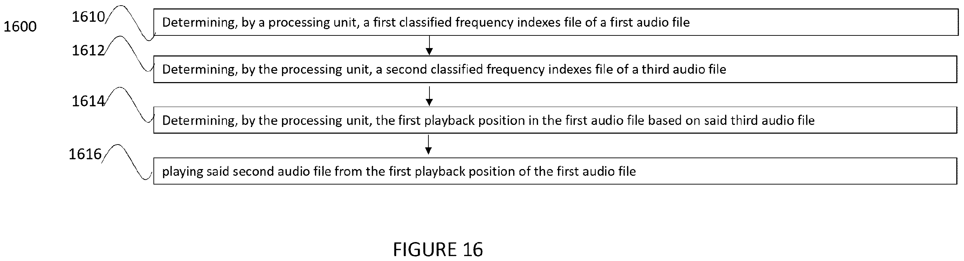

**Figure 16** is a flow diagram that illustrates an example method **1600** disclosing synchronizing playback of an audio file. At block **1610,** the method **1600** includes determining, by the processing unit, a first classified frequency indexes file of a first audio file. In some of the embodiments of the present invention, the first classified frequency indexes (CFI) file of the first audio file may be determined based on the steps as disclosed above in the Figure 5 by performing the steps **510-524.** The first audio file may be already existing audio file, alternative audio file that may be either dubbed or enhanced audio file or the like. At block **1612,** the method **1600** includes determining, by the processing unit, a second classified frequency indexes (CFI) file of a third audio file. In some of the embodiments of the present invention, the third audio file may be a recorded audio file. In some of the embodiments of the present invention, the second classified frequency indexes file may be determined based on the steps as disclosed above in Figure 6 by performing the steps **610-624.** In some of the embodiments of the present invention, the second classified frequency indexes file may be determined based on the steps as disclosed above in Figure 7 by performing the steps **710-726.** In some of the embodiments of the present invention, the second classified frequency indexes file may be determined based on the steps as disclosed above in Figure 8 by performing the steps **810-826.** At block **1614,** the method **1600** includes determining, by the processing unit, the first playback position in the first audio file based on said third audio file. In some of the embodiments of the present invention, the first playback position may be determined based on the steps as disclosed above in Figure 11 by performing the steps **1110-1114.** In some of the embodiments of the present invention, the first playback position may be determined based on the steps as disclosed above in Figure 12 by performing the steps **1210-1222.** In some of the embodiments of the present invention, the first playback position may be determined based on the steps as disclosed above in Figure 13 by performing the steps **1310-1330.** In some of the embodiments of the present invention, the first playback position may be determined based on the steps as disclosed above in Figure 14 by performing the steps **1410-1432.** At block **1616,** the method **1600** includes playing the second audio file from the determined first playback position of the first audio file. In some of the embodiments of the present invention, the first audio file, second file and the third audio file may be different from each other. In some of the embodiments of the present invention, the user may download the classified frequency index file of the first audio file, download the second audio file, and record the third audio file. Based on the recorded third audio file, the user may determine the playback position in first audio file and synchronize and play the second audio file.

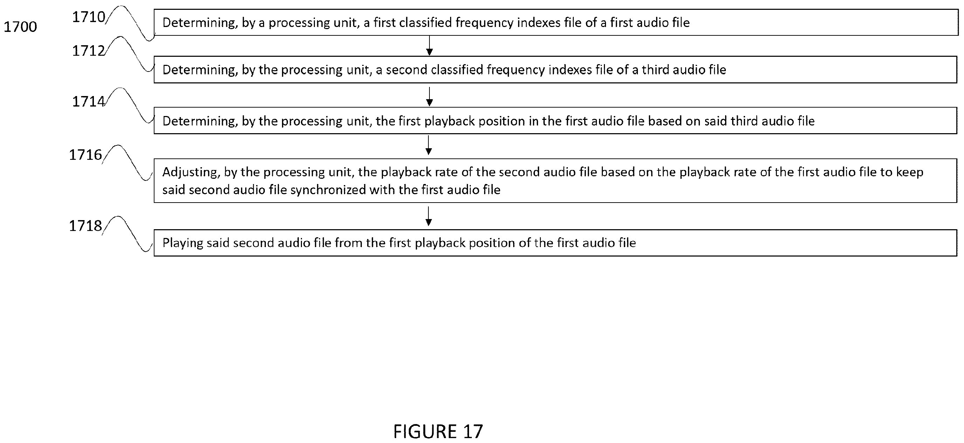

**Figure 17** is a flow diagram that illustrates an example method **1700** disclosing synchronizing playback of an audio file by adjusting playback rate. At block **1710,** the method **1700** includes determining, by the processing unit, a first classified frequency indexes file of a first audio file. In some of the embodiments of the present invention, the first classified frequency indexes (CFI) file of the first audio file may be determined based on the steps as disclosed above in the Figure 5 by performing the steps **510-524.** The first audio file may be already existing audio file, alternative audio file that may be either dubbed or enhanced audio file or the like. At block **1712,** the method **1700** includes determining, by the processing unit, a second classified frequency indexes (CFI) file of a third audio file. In some of the embodiments of the present invention, the third audio file may be a recorded audio file. In some of the embodiments of the present invention, the second classified frequency indexes file may be determined based on the steps as disclosed above in Figure 6 by performing the steps **610-624.** In some of the embodiments of the present invention, the second classified frequency indexes file may be determined based on the steps as disclosed above in Figure 7 by performing the steps **710-726.** In some of the embodiments of the present invention, the second classified frequency indexes file may be determined based on the steps as disclosed above in Figure 8 by performing the steps **810-826.** At block **1714,** the method **1700** includes determining, by the processing unit, the first playback position in the first audio file based on said third audio file. In some of the embodiments of the present invention, the first playback position may be determined based on the steps as disclosed above in Figure 11 by performing the steps **1110-1114.** In some of the embodiments of the present invention, the first playback position may be determined based on the steps as disclosed above in Figure 12 by performing the steps **1210-1222.** In some of the embodiments of the present invention, the first playback position may be determined based on the steps as disclosed above in Figure 13 by performing the steps **1310-1330.** In some of the embodiments of the present invention, the first playback position may be determined based on the steps as disclosed above in Figure 14 by performing the steps **1410-1432.** At block **1716,** the method **1700** includes adjusting, by the processing unit, the playback rate of the second audio file based on the playback rate of the first audio file to keep said second audio file synchronized with the first audio file. In some of the embodiment of the present invention, multiple time synchronization of audio files may be required. There may be a scenario where both the audio files or playbacks may go out of sync after a while due to their different playback rate or Frame per second (FPS) of associated video source. In some of the embodiments of the present invention, the playback rate of the second audio file is adjusted based on the playback rate of the first audio file to keep the second audio file synchronized with said first audio file. At block **1718,** the method **1700** includes playing the second audio file from the determined first playback position of the first audio file.

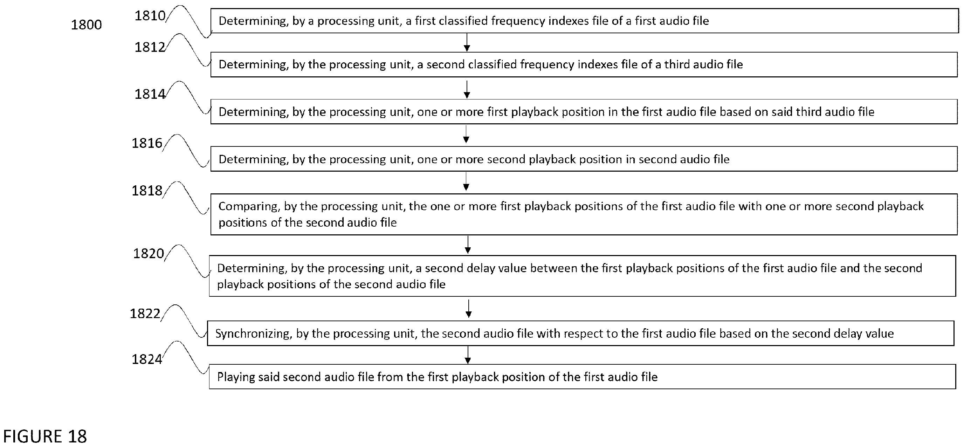

**Figure 18** is a flow diagram that illustrates an example method **1800** disclosing synchronizing playback of an audio file based on second delay value. At block **1810,** the method **1800** includes determining, by the processing unit, a first classified frequency indexes file of a first audio file. In some of the embodiments of the present invention, the first classified frequency indexes (CFI) file of the first audio file may be determined based on the steps as disclosed above in the Figure 5 by performing the steps **510-524.** The first audio file may be already existing audio file, alternative audio file that may be either dubbed or enhanced audio file or the like. At block **1812,** the method **1800** includes determining, by the processing unit, a second classified frequency indexes (CFI) file of a third audio file. In some of the embodiments of the present invention, the third audio file may be a recorded audio file. In some of the embodiments of the present invention, the second classified frequency indexes file may be determined based on the steps as disclosed above in Figure 6 by performing the steps **610-624.** In some of the embodiments of the present invention, the second classified frequency indexes file may be determined based on the steps as disclosed above in Figure 7 by performing the steps **710-726.** In some of the embodiments of the present invention, the second classified frequency indexes file may be determined based on the steps as disclosed above in Figure 8 by performing the steps **810-826.** At block **1814,** the method **1800** includes determining, by the processing unit, the one or more first playback position in the first audio file based on said third audio file. In some of the embodiments of the present invention, the one or more first playback position may be determined based on the steps as disclosed above in Figure 11 by performing the steps **1110-1114.** In some of the embodiments of the present invention, the one or more first playback position may be determined based on the steps as disclosed above in Figure 12 by performing the steps **1210-1222.** In some of the embodiments of the present invention, the one or more first playback position may be determined based on the steps as disclosed above in Figure 13 by performing the steps **1310-1330.** In some of the embodiments of the present invention, the one or more first playback position may be determined based on the steps as disclosed above in Figure 14 by performing the steps **1410-1432.** At block **1816,** the method **1800** includes determining, by the processing unit, the one or more second playback position in second audio file. In some of the embodiments of the present invention, the second audio file may be an alternate audio file or an enhanced or dubbed audio file that user may prefer to listen while viewing the media file in front of him. At block **1818,** the method **1800** includes comparing, by the processing unit, the one or more first playback positions of the first audio file with one or more second playback positions of the second audio file. In some of the embodiments of the present invention, there may be one or more playback positions in the first audio file that may be determined from the first classified frequency indexes file of the first audio file, for example, segments S₆, S₁₅, S₅₆. The one or more second playback positions may be determined equivalent to the first playback positions, for example, T₆, T₁₅, T₅₆. The first playback positions, for example, S₆, S₁₅, S₅₆ are compared with the second playback positions, for example, T₆, T₁₅, T₅₆ to synchronize the second audio file with respect to the first audio file. At block **1820,** the method **1800** includes determining, by the processing unit, the second delay value between the first playback positions of the first audio file and the second playback positions of the second audio file.. In some of the embodiments of the present invention, the user may take, for example, three different samples of the first playback position are considered. The user may further consider, for example, three different samples of the second playback positions of the second audio. The difference between the equivalent first playback position of the first audio and the second playback position of the second audio is determined to determine the second delay value.. In some of the embodiments of the present invention, the second delay value may be a time delay or a delay, which is based on the first playback positions and the second playback positions. In some of the embodiments of the present invention, the first playback positions, for example, may be segment S₆, S₁₅, S₅₆, whereas the second playback positions, for example, may be T₆, T₁₅, T₅₆. The difference between the S₆ and T₆, S₁₅ and T₁₅, and S₅₆ and T₅₆, are determined. The differences so determined are referred or considered to determine the second delay value. In another exemplary embodiments of the present invention, the one or more first playback positions, for example, may be a, b, c. The corresponding playback positions of the second playback positions for each synchronization may be d, e, f. The playback positions are subtracted i.e. playback positions of the second audio from the playback positions of the first audio. i.e. (a-d), (b-e) and (c-f). As a result, three values of difference in playback positions of the first audio and the second audio may be determined. The three values may be considered to determine the second delay value. At block **1822,** the method **1800** includes synchronizing, by the processing unit, the second audio file with respect to the first audio file based on the second delay value. In some of the embodiments of the present invention, the playback rate of the second audio may be adjusted to match the playback rate of the first audio. At block **1824,** the method 1800 includes playing the second audio file from the first playback position of the first audio file.

## Claims

1. A method for determining a 3-Dimensional data structure of an audio file, the method comprising the steps of:
dividing, by a segmenting unit, audio samples present in a time duration of said audio file into a plurality of segments of defined length, and determining number of said segments per second and total number of segments in said time duration of said audio file;
determining, by a processing unit, set of frequencies in each of said segments; and
determining, by said processing unit, a position value for each of said frequencies in each of said segments.

2. The method as claimed in claim 1, further comprising:
mapping, by said processing unit, said number of segments, said set of frequencies in each of said segments and said position value of each of said frequency in each of said segments, to form a classified frequency indexes file of said audio file; and
storing, by a storage unit, said number of segments, said set of frequencies in each of said segments and said position value for each of said frequencies in each of said segments.

3. A method for determining a 3-dimensional data structure of an audio file, the method comprising the steps of:
recording, by a recording unit, said audio file from a media source in real time;
dividing, by a segmenting unit, audio samples present in a time duration of said audio file into a plurality of segments of defined length, and determining number of said segments per second and total number of segments in said time duration of said audio file;
determining, by a processing unit, a set of frequencies in each of said segments; and
classifying, by said processing unit, said frequencies into a binary value with respect to a first threshold value.

4. The method as claimed in claim 3, further comprising:
mapping, by said processing unit, said number of segments, said set of frequencies in each of said segments, and said binary value for each of said frequencies in each of said segments, to form a classified frequency indexes file of said audio file;
storing, by a storage unit, said number of segments, said set of frequencies in each of said segments, and said binary value for each of said frequencies in each of said segments;
determining, by said processing unit, said first threshold value for each of said frequency in each of said segments is based on at least one of preceding and succeeding frequencies with respect to said frequency in said segment; and
classifying each of said frequencies in each of said segment to said binary value "1" corresponding to relevance of said frequency in said segment when magnitude of said frequency is above said first threshold value of said frequency, and
classifying each of said frequencies in each of said segment to said binary value "0" corresponding to non-relevance of said frequency in said segment when magnitude of said frequency is below said first threshold value of said frequency.

5. A method for determining a first playback position in a first audio file based on a third audio file, the method comprising the steps of:
a. determining a first classified frequency indexes file of said first audio file by-
dividing, by a segmenting unit, audio samples present in a time duration of said first audio into a plurality of segments of defined length, and determining number of said segments per second and total number of segments in said time duration of said first audio file,
determining, by the processing unit, a set of frequencies in each of said segments,
determining, by said processing unit, a position value for each of said frequencies in each of said segments of said first audio, and
mapping, by said processing unit, said number of segments, said frequencies in each of said segment and said position value of each of said frequency in each of said segments, to form said first classified frequency indexes file of said first audio file;
b. determining a second classified frequency indexes file of a third audio file by -
dividing, by a segmenting unit, audio samples present in a time duration of said third audio file into a plurality of segments of defined length, and determining number of said segments per second and total number of segments in said time duration of said third audio file,
determining, by said processing unit, set of frequencies in each of said segments,
classifying, by a processing unit, said frequencies into a binary value with respect to a first threshold value, and
mapping, by said processing unit, said number of segments, each of said frequencies in each of said segments, and said binary value for each of said frequencies in each of said segments, to form said second classified frequency indexes file of said third audio file; and
c. determining the first playback position in said first audio file based on said third audio file by -
comparing said second classified frequency indexes file of said third audio file with said first classified frequency indexes file of said first audio file to determine the playback position in said first audio file when said second classified frequency indexes file of said third audio file matches with said first classified frequency indexes file of said first audio file.

6. The method as claimed in claim 5, further comprising:
synchronizing playback of the first audio file with a second audio file to play said second audio file from the first playback position of said first audio file and playing said second audio file from the first playback position of the first audio file;
storing, by a storage unit, first classified frequency indexes file of said first audio file including said number of segments, said set of frequencies in each of said segments and said position value for each of said frequencies in each of said segments, and said second classified frequency indexes file of said third audio file including said number of segments, said set of frequencies in each of said segments, and said binary value for each of said frequencies in each of said segments,
wherein determining the second classified frequency indexes file of the third audio includes recording, by a recording unit, said third audio from a media source in real time;
determining, by said processing unit, said first threshold value for each of said frequencies in each of said segments based on at least one of preceding and succeeding frequencies with respect to said frequency in said segment; and
classifying each of said frequencies in each of said segment to said binary value "1" corresponding to relevance of said frequency in said segment when magnitude of said frequency is above said first threshold value of said frequency, and
classifying each of said frequencies in each of said segment to said binary value "0" corresponding to non-relevance of said frequency in said segment when magnitude of said frequency is below said first threshold value of said frequency;
comparing each segment of said second classified frequency indexes file of said third audio file with a plurality of set of segments in said first classified frequency indexes file of said first audio file, and
wherein number of segments in each set of said segments in said first classified frequency indexes file equals total number of segments in said second classified frequency indexes file,
wherein a subsequent set of segments are formed in said first classified frequency indexes file by replacing said first segment of said set with said second segment of said set and adding the segment adjacent to the last segment of said set to equal total number of segments in said set with total number of segments in said second classified frequency indexes file;
comparing each of said frequencies in each of said segments in said second classified frequency indexes file with the frequencies of each of said segments in said set of said first classified frequency indexes file, to classify each of said frequencies in each of said segments in the set of said first classified frequency indexes file to binary value "1" or "0" based on the binary value of the equivalent frequency in said segment of said second classified frequency indexes file;
determining a matchup index value of each set of said segments in said first classified frequency indexes file by determining total number of frequencies with binary value "1" in said set with respect to total number of frequencies in said set, and
assigning said matchup index value to the first segment in said set of segments in said first classified frequency indexes file;
determining the segment with highest said matchup index value in said first classified frequency indexes file and comparing highest said matchup index value with a second threshold value to identify said highest matchup index value is above said second threshold value;
comparing said matchup index value of the subsequent segments in said first classified frequency indexes file when the number of said segments in said first classified frequency indexes file with highest said matchup index value is greater than 1;
determining the highest matchup index value in said subsequent segments in said first classified frequency indexes file; and
determining a segment number of the said segment in said first classified frequency indexes file for said playback position in said first audio file by identifying the segment with highest said matchup index value greater than second threshold value and adding a first delay value equal to the total time taken in the method for determining the said playback position in said first audio file to the identified segment number.

7. The method as claimed in claim 6, further comprising:
adjusting playback rate of said second audio file based on the playback rate of said first audio file to keep said second audio file synchronized with said first audio file; and
determining a plurality of first playback position in said first audio file;
determining a plurality of second playback position in said second audio file;
comparing plurality of said first playback positions of said first audio file with a plurality of said second playback positions of said second audio file; and
determining a second delay value between said first playback positions of said first audio file and said second playback positions of said second audio file to synchronise said second audio file with respect to said first audio file.

8. A system for determining a 3-Dimensional data structure of an audio file, the system comprising:
a processing unit configured to -
divide audio samples present in a time duration of said audio file into a plurality of segments of defined length, and determine number of said segments per second and total number of segments in said time duration of said audio file,
determine set of frequencies in each of said segments, and determine a position value for each of said frequencies in each of said segments; and
a storage unit to store said audio file and said 3-Dimensional data structure of said audio file.

9. The system as claimed in claim 8, wherein said processing unit maps said number of segments, said set of frequencies in each of said segments and said position value of each of said frequency in each of said segments, to form a classified frequency indexes file of said audio file, wherein said storage unit stores the number of segments in said audio file, said set of frequencies in each of said segments and said position value for each of said frequencies in each of said segments, and
wherein said storage unit is at least one of a server storage and a local storage of a computing device.

10. A system for determining a 3-Dimensional data structure of an audio file, the system comprises:
a recording unit configured to record said audio file from a media source in real time;
a processing unit configured to -
divide audio samples present in a time duration of said audio file into a plurality of segments of defined length, and determine number of said segments per second and total number of segments in said time duration of said audio file,
determine a set of frequencies in said segments, and
classify said frequencies in said segments into a binary value with respect to a first threshold value; and
a storage unit to store said audio file and said 3-Dimensional data structure of said audio file.

11. The system as claimed in claim 10, wherein said processing unit determines said first threshold value for each of said frequencies in each of said segments based on at least one of preceding and succeeding frequency with respect to the frequency in said segment,
wherein said processing unit is configured to map said number of segments, said set of frequencies in each of said segments, and said binary value for each of said frequencies in each of said segments, to form a classified frequency indexes file of said audio file, and
wherein said processing unit classifies each of said frequencies in each of said segments to said binary value "1" corresponding to relevance of said frequency in said segment when magnitude of said frequency is above said first threshold value of said frequency, and
classifies each of said frequencies in each of said segment to said binary value "0" corresponding to non-relevance of said frequency in said segment when magnitude of said frequency is below said first threshold value of said frequency.

12. The system as claimed in claim 10, wherein said processing unit is configured to map said number of segments, said set of frequencies in each of said segments, and said binary value for each of said frequencies in each of said segments, to form a classified frequency indexes file of said audio file, wherein said storage unit stores the number of segments in said audio file, the set of frequencies in each of said segments and said binary value for each of said frequencies in each of said segments, and
wherein said storage unit is at least one of a server storage and a local storage of a computing device.

13. A system for determining a playback position in a first audio file based on a third audio file, the system comprising:
a. a processing unit configured to -
a.1 determine a first classified frequency indexes file of said first audio file by -
dividing audio samples present in a time duration of said first audio file into a plurality of segments of defined length, and determining number of said segments per second and total number of segments in said time duration of said first audio file,
determining a set of frequencies in each of said segments, determining a position value for each of said frequencies in each of said segments of said first audio file, and
mapping, said number of segments, said set of frequencies in each of said segment and said position value of each of said frequency in each of said segments, to form said classified frequency indexes file of said first audio file,
a.2 determine a second classified frequency indexes file of a third audio file by -
dividing, audio samples present in a time duration of said third audio file into a plurality of segments of defined length, and determining number of said segments per second and total number of segments in said time duration of said third audio file,
determining set of frequencies in said segments, classifying, said frequencies into a binary value with respect to a first threshold value, and
mapping said number of segments, said set of frequencies in each of said segments, and said binary value for each of said frequencies in each of said segments, to form said second classified frequency indexes file of said third audio file, and
a.3 determine said first playback position in said first audio file based on said third audio file by -
comparing said second classified frequency indexes file of said third audio file with said first classified frequency indexes file of said first audio file to determine the first playback position in said first audio file when said second classified frequency indexes file of said third audio file matches with said first classified frequency indexes file of said first audio file; and
b. a storage unit configured to store said first classified frequency indexes file and said second classified frequency indexes file.

14. The system as claimed in claim 13, wherein the system includes a recording unit for recording said third audio file from a media source in real time, and wherein said storage unit is at least one of a server storage and a local storage of a computing device,
wherein said processing unit determines said first threshold value for each of said frequencies in each of said segments based on at least one of preceding and succeeding frequency with respect to said frequency in said segment, and
wherein said processing unit classifies each of said frequencies in each of said segment to said binary value "1" corresponding to relevance of said frequency in said segment when magnitude of said frequency is above said first threshold value of said frequency, and classifies each of said frequencies in each of said segment to said binary value "0" corresponding to non-relevance of said frequency in said segment when magnitude of said frequency is below said first threshold value of said frequency,
wherein said processing unit compares each segment of said second classified frequency indexes file of said third audio file with a plurality of set of segments in said first classified frequency indexes file of said first audio file, wherein number of segments in each set of said segments in said first classified frequency indexes file equals total number of segments in said second classified frequency indexes file, and wherein the subsequent set of segments are formed in said first classified frequency indexes file by replacing said first segment of said set with said second segment of said set and adding the segment adjacent to the last segment of said set to equal total number of segments in said set with total number of segments in said second classified frequency indexes file,
wherein said processing unit compares each of said frequencies in each of said segments in said second classified frequency indexes file with the frequencies of each of said segments in said set of said first classified frequency indexes file, to classify each of said frequencies in each of said segments in the set of said first classified frequency indexes file to binary value "1" or "0" based on the binary value of the equivalent frequency in said segment of said second classified frequency indexes file,
wherein said processing unit determines a matchup index value of each set of said segments in said first classified frequency indexes file by determining total number of frequencies with binary value "1" in said set with respect to total number of frequencies in said set and assigns said matchup index value to the first segment in said set of segments in said first classified frequency indexes file,
wherein said processing unit -
determines segment with highest said matchup index value in said first classified frequency indexes file, and
compares highest said matchup index value with a second threshold value to identify highest said matchup index value is above said second threshold value,
wherein said processing unit compares said matchup index value of the subsequent segments in said first classified frequency indexes file when the number of said segments in said first classified frequency indexes file with highest matchup index is greater than 1; and determines the highest matchup index value in said subsequent segments in said first classified frequency indexes file, and
wherein said processing unit determines a segment number of said segment in said first classified frequency indexes file for said first playback position in said first audio file by identifying the segment with highest matchup index value greater than second threshold value and adding a first delay value equal to total time taken in the method for determining the said first playback position in said first audio file to the identified segment number.

15. The system as claimed in claim 13, wherein said processing unit synchronizes playback of the first audio file with a second audio file to play said second audio file from the first playback position of the said first audio file, and plays said second audio file from the first playback position of the first audio file,
wherein said processing unit adjusts playback rate of said second audio file based on playback rate of said first audio file to keep said second audio file synchronized with said first audio file, and
wherein said processing unit is configured to:
determining a plurality of first playback positions in said first audio file;
determining a plurality of second playback positions in said second audio file;
comparing the plurality of said first playback positions of said first audio file with the plurality of said second playback positions of said second audio file; and
determining a second delay value between said playback positions of said first audio file and said playback positions of said second audio file to synchronise said second audio file with respect to said first audio file.
